(19) Europäisches Patentamt
European Patent Office
Office européen des brevets

(11) **EP 4 773 241 A1**

## (12) EUROPEAN PATENT APPLICATION
published in accordance with Art. 153(4) EPC

(43) Date of publication:
**08.07.2026 Bulletin 2026/28**

(21) Application number: **24887325.9**

(22) Date of filing: **16.05.2024**

(51) International Patent Classification (IPC):
*H01M 4/525* (2010.01)   *H01M 4/505* (2010.01)
*H01M 4/485* (2010.01)   *H01M 50/491* (2021.01)
*H01M 50/449* (2021.01)   *H01M 10/058* (2010.01)
*H01M 10/0525* (2010.01)

(52) Cooperative Patent Classification (CPC):
Y02E 60/10

(86) International application number:
**PCT/CN2024/093541**

(87) International publication number:
**WO 2025/097701 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2023  CN 202311475935**

(71) Applicant: **Contemporary Amperex Technology
Co., Limited
Ningde, Fujian 352100 (CN)**

(72) Inventors:
• **XUE, Junpeng
  Ningde, Fujian 352100 (CN)**

• **WANG, Dandan
  Ningde, Fujian 352100 (CN)**
• **XU, Shoujiang
  Ningde, Fujian 352100 (CN)**
• **DAI, Xiaoshan
  Ningde, Fujian 352100 (CN)**
• **ZHU, Baojian
  Ningde, Fujian 352100 (CN)**
• **WEI, Xichen
  Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

## (54) BATTERY CELL AND ELECTRIC DEVICE COMPRISING SAME

(57)    A battery cell and an electric device comprising same. The battery cell comprises an electrode assembly, which comprises a positive electrode sheet and a separator, wherein the positive electrode sheet comprises a positive electrode current collector and a positive electrode membrane layer arranged on at least one surface of the positive electrode current collector, the positive electrode membrane layer comprises a positive electrode active material, the positive electrode active material comprises a layered lithium-containing transition metal oxide, and the volume distribution particle size Dv50 of the positive electrode active material is smaller than or equal to 6.5 $\mu$m; and the separator comprises a porous substrate and a porous coating arranged on at least one surface of the porous substrate, and the porous coating comprises a fiber material and a granular filler. The electric device can make a battery have a high energy density, good low-temperature power performance and cycling performance.

**5**

FIG. 1

EP 4 773 241 A1

**Description**

CROSS-REFERENCE TO RELATED APPLICATION

The present application claims priority to Chinese Patent Application No. 202311475935.0, filed on November 08, 2023 and entitled "BATTERY CELL AND ELECTRIC DEVICE COMPRISING SAME", the content of which is incorporated herein by reference in its entirety.

TECHNICAL FIELD

The present application relates to a battery cell and an electric device including the same.

BACKGROUND

In recent years, batteries have been widely used in energy storage power systems such as hydropower, thermal power, wind power, and solar power stations, as well as in various fields such as electric tools, electric bicycles, electric motorcycles, electric vehicles, military equipment, and aerospace. As the application range of batteries becomes increasingly wide, people's demands for the use of batteries are also growing. For example, the batteries are required to exhibit high thermal stability to be less prone to safety accidents such as fire and explosion, and the batteries are also required to have high energy density and maintain good power performance at low temperature conditions as well. However, to improve the thermal stability of the battery and reduce the internal short circuits inside the battery, the separator usually needs to have a large thickness, but the increased thickness of the separator will reduce the energy density of the battery and also affect the low-temperature power performance of the battery. Therefore, how to make the battery have good comprehensive performance still remains a challenge in current battery development.

SUMMARY

The present application provides a battery cell and an electric device including the same. The battery cell can enable the battery to have high energy density and good low-temperature power performance and cycle performance.
A first aspect of the present application provides a battery cell. The battery cell includes an electrode assembly including a positive electrode plate and an separator, where the positive electrode plate includes a positive electrode current collector and a positive electrode film layer disposed on at least one surface of the positive electrode current collector, the positive electrode film layer includes a positive electrode active material, the positive electrode active material includes a layered lithium-containing transition metal oxide, and the volume distribution particle size Dv50 of the positive electrode active material is less than or equal to 6.5 $\mu$m; the separator includes a porous substrate and a porous coating disposed on at least one surface of the porous substrate, and the porous coating includes a fibrous material and a particulate filler.
In the present application, by adjusting the type and the volume distribution particle size Dv50 of the positive electrode active material and the composition of the porous coating of the separator, the battery can have high energy density and good low-temperature power performance and cycle performance.
In some embodiments, the volume distribution particle size Dv50 of the positive electrode active material is less than or equal to 6 $\mu$m, optionally 2 $\mu$m to 5.3 $\mu$m.
By further adjusting the volume distribution particle size Dv50 of the positive electrode active material, the diffusion path of lithium ions in the positive electrode active material can be further shortened, and thus the positive electrode active material can quickly consume lithium ions in the electrolytic solution, so that the difference in the concentration of lithium ions between the negative electrode side and the positive electrode side of the separator can be further increased, the driving force for transmitting lithium ions from the negative electrode to the positive electrode is increased, and thereby the low-temperature power performance of the battery can be further improved; the side reaction of the battery can also be reduced, and the capacity fade rate of the battery can be decreased, thereby being conducive to improving the cycle life of the battery; the positive electrode plate can also be allowed to have a high compaction density, thereby also being conducive to improving the energy density of the battery.
In some embodiments, the volume distribution particle size Dv90 of the positive electrode active material is less than or equal to 14.3 $\mu$m, optionally 4.4 $\mu$m to 13.5 $\mu$m.
By further adjusting the volume distribution particle size Dv90 of the positive electrode active material, the diffusion path of lithium ions in the positive electrode active material can be further shortened, so that the difference in the concentration of lithium ions between the negative electrode side and the positive electrode side of the separator can be further increased, the driving force for transmitting lithium ions from the negative electrode to the positive electrode is increased, and thereby the low-temperature power performance of the battery can be further improved; the side reaction of the battery can also be reduced, and the capacity fade rate of the battery can be decreased, thereby being conducive to improving the cycle life of the battery; the positive electrode plate can also be allowed to have a high compaction density, thereby also being conducive to improving the energy density of the battery.

In some embodiments, the volume distribution particle size Dv10 of the positive electrode active material is less than or equal to 3 $\mu$m, optionally 1 $\mu$m to 2 $\mu$m.

By further adjusting the volume distribution particle size Dv10 of the positive electrode active material, the side reaction of the battery can be reduced, and the capacity fade rate of the battery can be decreased, thereby being conducive to improving the cycle life of the battery; the positive electrode plate can also be allowed to have a high compaction density, thereby also being conducive to improving the energy density of the battery.

In some embodiments, the particle size distribution (Dv90 - Dv10)/Dv50 of the positive electrode active material is 0.8-2.5, optionally 1.3-2.3.

By further adjusting the particle size distribution (Dv90 - Dv10)/Dv50 of the positive electrode active material to be within the above range, the compaction density of the positive electrode plate can be improved, and the space utilization rate of the positive electrode active material can be improved, thereby helping to improve the energy density of the battery; the contact resistance between particles of the positive electrode active material can also be reduced, the impedance of the battery can be reduced, and thereby the low-temperature power performance of the battery can also be improved.

In some embodiments, the positive electrode active material includes a layered lithium-containing transition metal oxide with a single-crystal morphology.

In some embodiments, the volume distribution particle size Dv50 of the layered lithium-containing transition metal oxide with the single-crystal morphology is less than or equal to 5 $\mu$m, optionally 2 $\mu$m to 4 $\mu$m.

In some embodiments, the volume distribution particle size Dv90 of the layered lithium-containing transition metal oxide with the single-crystal morphology is less than or equal to 10 $\mu$m, optionally 4.4 $\mu$m to 8 $\mu$m.

In some embodiments, the volume distribution particle size Dv10 of the layered lithium-containing transition metal oxide with the single-crystal morphology is less than or equal to 3 $\mu$m, optionally 1 $\mu$m to 2 $\mu$m.

In some embodiments, the particle size distribution (Dv90 - Dv10)/Dv50 of the layered lithium-containing transition metal oxide with the single-crystal morphology is 0.8-2.5, optionally 1.3-1.5.

By adjusting the volume distribution particle sizes and the particle size distribution of the layered lithium-containing transition metal oxide with the single-crystal morphology to be within the above ranges, the battery can be allowed to have both good low-temperature power performance and good cycle performance.

In some embodiments, the positive electrode active material includes the layered lithium-containing transition metal oxide with the single-crystal morphology and a layered lithium-containing transition metal oxide with a polycrystalline morphology.

In some embodiments, the volume distribution particle size Dv50 of the layered lithium-containing transition metal oxide with the polycrystalline morphology is 7 $\mu$m to 12 $\mu$m, optionally 8 $\mu$m to 10 $\mu$m.

In some embodiments, the volume distribution particle size Dv90 of the layered lithium-containing transition metal oxide with the polycrystalline morphology is 12 $\mu$m to 20 $\mu$m, optionally 13 $\mu$m to 18 $\mu$m.

In some embodiments, the volume distribution particle size Dv10 of the layered lithium-containing transition metal oxide with the polycrystalline morphology is 2 $\mu$m to 6 $\mu$m, optionally 3 $\mu$m to 5 $\mu$m.

In some embodiments, the particle size distribution (Dv90 - Dv10)/Dv50 of the layered lithium-containing transition metal oxide with the polycrystalline morphology is 1.1-1.5, optionally 1.2-1.4.

In some embodiments, the weight proportion of the layered lithium-containing transition metal oxide with the polycrystalline morphology in the positive electrode active material is 20 wt% to 80 wt%. By adjusting the weight proportion of the layered lithium-containing transition metal oxide with the polycrystalline morphology to be within the above range, the battery can be allowed to have high energy density, good low-temperature power performance, and good cycle performance.

In some embodiments, the aspect ratio of the fibrous material is 5-60, optionally 10-30. By adjusting the aspect ratio of the fibrous material to be within the above range, the fibrous material can form a three-dimensional framework structure, and the formed three-dimensional framework structure can also interweave with the particulate filler to achieve an integrated effect, so that the heat resistance of the separator and the electrolytic solution wettability and retention property of the separator can be improved, thereby helping to improve the thermal stability and cycle performance of the battery.

In some embodiments, the average length of the fibrous material is 100 nm to 600 nm, optionally 200 nm to 450 nm. By adjusting the average length of the fibrous material to be within the above range, the fibrous material can form a three-dimensional framework structure, and the formed three-dimensional framework structure can also interweave with the particulate filler to achieve an integrated effect, so that the heat resistance and ion transmission property of the separator can be further improved, thereby helping to improve the thermal stability of the battery.

In some embodiments, the average diameter of the fibrous material is 11 nm to 40 nm, optionally 12 nm to 34 nm. By adjusting the average diameter of the fibrous material to be within the above range, the fibrous material can form a three-dimensional framework structure, and the formed three-dimensional framework structure can also interweave with the particulate filler to achieve an integrated effect, so that the ion transmission property of the separator can be further improved, thereby helping to improve the cycle performance of the battery.

In some embodiments, the weight content of the fibrous material in the porous coating is less than or equal to 40 wt%, optionally 10 wt% to 30 wt%.

In some embodiments, the weight content of the particulate filler in the porous coating is greater than or equal to 60 wt%, optionally 68 wt% to 88 wt%.

Allowing the weight content of the fibrous material and the particulate filler to be within the above range is beneficial to an appropriate viscosity of the porous coating slurry, thereby facilitating the coating operation. In addition, it is also beneficial to the interweaving of the three-dimensional framework structure formed by the fibrous material with the particulate filler to achieve an integrated effect, so that the porous coating can have a more stable spatial network structure, and the heat resistance, ion transmission property, electrolytic solution wettability and retention property, and voltage breakdown resistance of the separator can be further improved, thereby further improving the thermal stability and cycle performance of the battery.

In some embodiments, the fibrous material includes one or more of an organic material and an inorganic material. Optionally, the organic material includes one or more of nanocellulose, polytetrafluoroethylene nanofiber, and polyamide nanofiber. Optionally, the inorganic material includes one or more of halloysite nanotube, nanorod-shaped aluminum oxide, nanorod-shaped boehmite, nanorod-shaped silicon oxide, and glass fiber.

In some embodiments, the fibrous material includes nanocellulose, the nanocellulose includes a modifying group, and the modifying group includes one or more of an amine group, a carboxyl group, an aldehyde group, a sulfonic acid group, a boric acid group, and a phosphoric acid group, optionally one or more of a sulfonic acid group, a boric acid group, and a phosphoric acid group.

In some embodiments, the particulate filler includes one or more of an organic particle, an inorganic particle, and an organic-inorganic framework material.

In some embodiments, the particulate filler includes a first component with a secondary particle morphology and a second component with a primary particle morphology.

In some embodiments, the average particle size of the first component with the secondary particle morphology is less than the average particle size of the second component with the primary particle morphology. This is beneficial to better exerting the roles of the first component with the secondary particle morphology and the second component with the primary particle morphology.

In some embodiments, the average particle size of the first component with the secondary particle morphology is less than 200 nm.

Allowing the average particle size of the first component with the secondary particle morphology to be within the above range can enable the first component to have a high specific surface area and be better matched and interwoven with the three-dimensional framework structure formed by the fibrous material to achieve an integrated effect, so that the heat resistance of the separator and the electrolytic solution wettability and retention property of the separator can be increased, thereby helping to improve the thermal stability and cycle performance of the battery.

In some embodiments, the average particle size of the second component with the primary particle morphology is 200 nm to 800 nm.

Allowing the average particle size of the second component with the primary particle morphology to be within the above range can enable the second component with the primary particle morphology to better exert its supporting role, so that the porous coating maintains a stable pore structure during long-term charging and discharging. This is beneficial to reducing the moisture content of the separator and promoting ion transmission, and can also improve the heat resistance of the separator.

In some embodiments, the particle size of the primary particles in the first component forming the secondary particle morphology is 8 nm to 30 nm, optionally 10 nm to 20 nm.

Allowing the particle size of the primary particles in the first component forming the secondary particle morphology to be within the above range can enable the first component to have a good secondary particle morphology, which is beneficial to better interweaving of the first component with the three-dimensional framework structure formed by the fibrous material to achieve an integrated effect.

In some embodiments, the weight content of the first component with the secondary particle morphology in the porous coating is greater than the weight content of the second component with the primary particle morphology in the porous coating. This is beneficial to better exerting the roles of the first component with the secondary particle morphology and the second component with the primary particle morphology.

In some embodiments, the weight content of the first component with the secondary particle morphology in the porous coating is 20 wt% to 85 wt%.

Allowing the weight content of the first component with the secondary particle morphology to be within the above range is beneficial to an appropriate viscosity of the porous coating slurry, thereby further facilitating the coating operation.

In addition, it is also beneficial to the interweaving with the three-dimensional framework structure formed by the fibrous material to achieve an integrated effect, so that the porous coating can have a more stable spatial network structure, and the tensile strength, puncture resistance, and resistance to external force compression of the separator can be further improved.

In some embodiments, the weight content of the second component with the primary particle morphology in the porous coating is 5 wt% to 60 wt%.

Allowing the weight content of the second component with the primary particle morphology to be within the above range can enable the second component with the primary particle morphology to better exert its supporting role, so that the porous coating maintains a stable pore structure during long-term charging and discharging. This is beneficial to reducing the moisture content of the separator and promoting ion transmission, and can also improve the heat resistance of the separator.

In some embodiments, the thickness of the porous substrate is less than or equal to 5.5 $\mu$m, optionally 3 $\mu$m to 5 $\mu$m. This is beneficial to enhancing the energy density of the battery.

In some embodiments, the thickness of the porous coating is less than or equal to 3 $\mu$m, optionally 0.5 $\mu$m to 2 $\mu$m. This is beneficial to enhancing the energy density of the battery.

In some embodiments, the layered lithium-containing transition metal oxide includes a Ni element, and the molar amount of the Ni element accounts for 70% or more of the total molar amount of transition metal elements in the layered lithium-containing transition metal oxide; optionally, the molar amount of the Ni element accounts for 90% or more of the total molar amount of the transition metal elements in the layered lithium-containing transition metal oxide. This can allow the battery to have a high energy density.

In some embodiments, the upper charge cut-off voltage of the battery cell is greater than or equal to 4.25 V, optionally 4.30 V to 4.45 V. This can allow the battery to have a high energy density.

A second aspect of the present application provides an electric device, which includes the battery cell according to the first aspect of the present application.

The electric device of the present application includes the battery cell provided by the present application and thus has at least the same advantages as the battery cell.

BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skill in the art may still derive other drawings from these drawings without creative efforts.

FIG. 1 is a schematic view of a battery cell according to some embodiments of the present application.

FIG. 2 is a schematic view of a battery module according to some embodiments of the present application.

FIG. 3 is a schematic view of a battery pack according to some embodiments of the present application.

FIG. 4 is a schematic exploded view of the battery pack shown in FIG. 3.

FIG. 5 is a schematic exploded view of a battery cell according to some embodiments of the present application.

FIG. 6 is a schematic view of an electric device according to some embodiments of the present application.

The drawings are not necessarily drawn to scale. The reference numerals are illustrated as follows: 1: battery pack; 2: upper case body; 3: lower case body; 4: battery module; 5: battery cell; 51: shell body; 52: electrode assembly; 53: cover plate.

DETAILED DESCRIPTION

Hereinafter, embodiments of the battery cell and the electric device containing the same of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, in the present application, the terms "first", "second", and the like are used to distinguish different objects and are not intended to describe a specific order or priority.

In the present application, the terms "a plurality of" and "multiple" mean two or more.

In the description of the embodiments of the present application, unless otherwise specified, a first feature being "above" or "below" a second feature may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or may simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

Unless otherwise specified, the terms used in the present application have well-known meanings that are commonly understood by those skilled in the art.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

In the present application, the terms "layered lithium-containing transition metal oxide with the single-crystal morphology" and "layered lithium-containing transition metal oxide with the polycrystalline morphology" both have meanings well-known in the art.

The "layered lithium-containing transition metal oxide with the single-crystal morphology" further includes a layered lithium-containing transition metal oxide with the quasi-single-crystal (also referred to as a single-crystal-like) morphology. The quasi-single-crystal (single-crystal-like) has meaning well-known in the art and generally refers to particles formed by agglomeration of a small number (for example, 2-5) of primary particles. The layered lithium-containing transition metal oxide with the polycrystalline morphology refers to a layered lithium-containing transition metal oxide with the secondary particle morphology formed by agglomeration of a plurality of primary particles.

The "layered lithium-containing transition metal oxide with the single-crystal morphology" and the "layered lithium-containing transition metal oxide with the polycrystalline morphology" can be distinguished by a scanning electron microscope.

It should be noted that in the embodiments of the present application, various parameter tests for the separator, the positive electrode plate, the negative electrode plate, and the like may be measured during the battery fabrication process, or may be measured after disassembling each component from the fabricated battery.

The battery mentioned in the embodiments of the present application may be a single physical module that includes one or a plurality of battery cells to provide a higher voltage and capacity. For example, the battery mentioned in the present application may include a battery cell, a battery module, a battery pack, or the like.

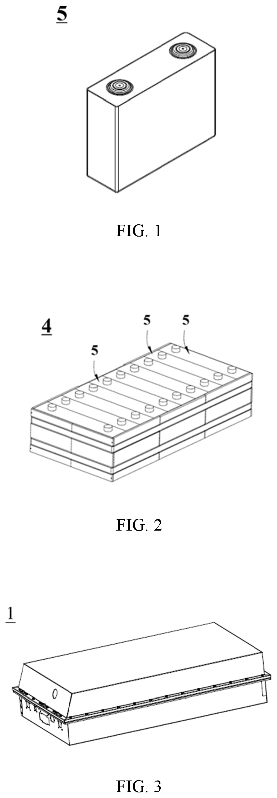

A battery cell is the smallest unit forming a battery and can independently realize the functions of charging and discharging. The battery cell may be cylindrical, rectangular parallelepiped-shaped, or in other shapes, which is not limited in the embodiments of the present application. FIG. 1 shows a battery cell 5 having a rectangular parallelepiped structure as one example.

When there are a plurality of battery cells, the plurality of battery cells are connected in series, in parallel, or in series-parallel by a busbar component. In some embodiments, the battery may be a battery module, and when there are a plurality of battery cells, the plurality of battery cells are arranged and fixed to form one battery module. In some embodiments, the battery may be a battery pack. The battery pack includes a case and a battery cell, and the battery cell or the battery module is accommodated in the case. In some embodiments, the case may be a part of the chassis structure of the vehicle. For example, a part of the case may become at least a part of the bottom plate of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

In some embodiments, the battery cells may be assembled into a battery module. The number of battery cells included in the battery module may be more than one, and the specific number may be adjusted based on the application and capacity of the battery module. FIG. 2 is a schematic view of a battery module 4 as one example. As shown in FIG. 2, in the battery module 4, a plurality of battery cells 5 may be sequentially arranged in a length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

In some embodiments, the above battery module may further be assembled into a battery pack; the number of the battery modules included in the battery pack may be adjusted based on the application and capacity of the battery pack.

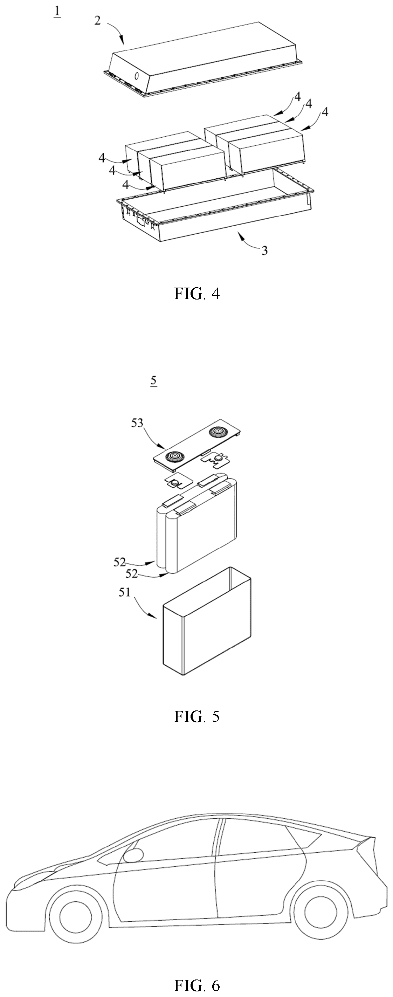

FIGs. 3 and 4 are schematic views of a battery pack 1 as one example. As shown in FIGs. 3 and 4, the battery pack 1 may include a case and a plurality of battery modules 4 disposed in the case. The case includes an upper case body 2 and a lower case body 3. The upper case body 2 is configured for lidding the lower case body 3 to form a closed space for accommodating the battery modules 4. The plurality of battery modules 4 may be arranged in any manner in the case.

The battery cell provided in the embodiments of the present application includes an electrode assembly and an electrolyte. The battery cell provided in the embodiments of the present application may include a secondary battery cell, for example, a lithium-ion secondary battery cell.

The electrode assembly may be a winding structure or a stacking structure, which is not limited in the embodiments of the present application.

The battery cell may also include an outer packaging, which may be configured for packaging the electrode assembly and electrolyte. The outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS). In some embodiments, as shown in FIG. 5, the outer packaging may include a shell body 51 and a cover plate 53. The shell body 51 may include a bottom plate and side plates connected to the bottom plate, and the bottom plate and the side plates define, in an enclosing manner, an accommodating cavity. The shell body 51 is provided with an opening communicating with the accommodating cavity, and the cover plate 53 is configured for lidding the opening to close the accommodating cavity. The electrode assembly 52 is packaged in the accommodating cavity. The number of electrode assemblies 52 included in the battery cell 5 may be one or more and may be adjusted as needed.

The electrode assembly includes a positive electrode plate, a negative electrode plate, and a separator.

The positive electrode plate includes a positive electrode current collector and a positive electrode film layer disposed on at least one surface of the positive electrode current collector. The positive electrode film layer includes a positive electrode active material, the positive electrode active material includes a layered lithium-containing transition metal oxide, and the volume distribution particle size Dv50 of the positive electrode active material is less than or equal to 6.5 $\mu$m.

The separator includes a porous substrate and a porous coating disposed on at least one surface of the porous substrate, and the porous coating includes a fibrous material and a particulate filler.

In the present application, the fibrous material refers to a material having an aspect ratio of 5 or more.

The separator is located between the positive electrode plate and the negative electrode plate, primarily serving to prevent short circuits between the positive electrode and the negative electrode while allowing lithium ions to pass through freely to form a circuit.

With the application and promotion of secondary batteries, there is an increasing demand for higher energy density in batteries. Thinning the separator is an effective measure to improve the energy density of batteries. The separator used in the current commercial secondary battery is usually a polyolefin porous film, such as a polyethylene porous film, a polypropylene porous film, or a polypropylene/polyethylene/polypropylene three-layer composite film, the melting point of which is between 130 °C and 160 °C. Therefore, when the thickness of the separator is reduced, the heat resistance of the separator deteriorates, and a significant thermal shrinkage effect occurs when the separator is heated, so that the positive electrode and the negative electrode inside the battery are in direct contact to cause internal short circuits, thereby reducing the thermal stability of the battery.

For the separator provided in the embodiments of the present application, a porous coating including a fibrous material and a particulate filler is disposed on at least one surface of a porous substrate. The fibrous material has the advantages of light weight, high temperature resistance, and small volume change after being heated. Therefore, in one aspect, the thermal shrinkage of the separator can be reduced, the heat resistance of the separator can be improved, and thus the battery using the separator can exhibit high thermal stability; in another aspect, by using the fibrous material in the porous coating, the thickness of the porous coating can be designed to be thin, so that the overall thickness of the separator can be reduced, and thus the battery can have high energy density.

However, when the porous coating includes both the fibrous material and the particulate filler, the porosity of the separator becomes low, thereby affecting ion diffusion and thereby affecting the low-temperature power performance of the battery.

At a low temperature, the impedance of the battery increases, the discharge voltage plateau decreases, and the terminal voltage of the battery rapidly decreases. Consequently, the available capacity and power of the battery decline quickly. Taking a battery for an electric vehicle as an example, the acceleration and the climbing performance of the electric vehicle will decline rapidly at a low temperature.

The positive electrode plate provided in the embodiments of the present application adopts a positive electrode active material with a volume distribution particle size Dv50 of less than or equal to 6.5 $\mu$m, and the positive electrode active material includes a layered lithium-containing transition metal oxide, so that the diffusion path of lithium ions in the positive electrode active material can be shortened, and thereby the lithium ions transmitted from the negative electrode to the positive electrode through the separator can be quickly consumed. In this case, the difference in the concentration of lithium ions between the negative electrode side and the positive electrode side of the separator becomes large, and the driving force for transmitting lithium ions from the negative electrode to the positive electrode becomes large, so that the low-temperature power performance and cycle performance of the battery can be improved.

Therefore, in the embodiments of the present application, by adjusting the type and the volume distribution particle size Dv50 of the positive electrode active material and the composition of the porous coating of the separator, the battery can have high energy density and good low-temperature power performance and cycle performance.

In some embodiments, the volume distribution particle size Dv50 of the positive electrode active material may be less than or equal to 6 $\mu$m. For example, it may be 2 $\mu$m, 2.3 $\mu$m, 2.6 $\mu$m, 3 $\mu$m, 3.5 $\mu$m, 4 $\mu$m, 4.6 $\mu$m, 5.3 $\mu$m, 6 $\mu$m, or a range composed of any of the above values. Optionally, the volume distribution particle size Dv50 of the positive electrode active material may be 2 $\mu$m to 6 $\mu$m, 2 $\mu$m to 5.3 $\mu$m, 2.3 $\mu$m to 5.3 $\mu$m, 2.6 $\mu$m to 5.3 $\mu$m, or 2.6 $\mu$m to 4.6 $\mu$m.

By further adjusting the volume distribution particle size Dv50 of the positive electrode active material, the diffusion path of lithium ions in the positive electrode active material can be further shortened, and thus the positive electrode active material can quickly consume lithium ions in the electrolytic solution, so that the difference in the concentration of lithium ions between the negative electrode side and the positive electrode side of the separator can be further increased, the driving force for transmitting lithium ions from the negative electrode to the positive electrode is increased, and thereby the low-temperature power performance of the battery can be further improved. By further adjusting the volume distribution particle size Dv50 of the positive electrode active material, the side reaction of the battery can be reduced, and the capacity fade rate of the battery can be decreased, thereby being conducive to improving the cycle life of the battery. By further adjusting the volume distribution particle size Dv50 of the positive electrode active material, the positive electrode plate can also be allowed to have a high compaction density, thereby also being conducive to improving the energy density of the battery.

In some embodiments, the volume distribution particle size Dv90 of the positive electrode active material may be less than or equal to 14.3 $\mu$m. For example, it may be 4.4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 13.5 $\mu$m, 13.8 $\mu$m, 14.3 $\mu$m, or a range composed of any of the above values. Optionally, the volume distribution particle size Dv90 of the positive electrode active material may be 4.4 $\mu$m to 13.5 $\mu$m, 4.4 $\mu$m to 11 $\mu$m, or 4.4 $\mu$m to 9.0 $\mu$m.

By further adjusting the volume distribution particle size Dv90 of the positive electrode active material, the diffusion path of lithium ions in the positive electrode active material can be further shortened, so that the difference in the concentration of lithium ions between the negative electrode side and the positive electrode side of the separator can be further increased, the driving force for transmitting lithium ions from the negative electrode to the positive electrode is increased, and thereby the low-temperature power performance of the battery can be further improved. By further adjusting the volume distribution particle size Dv90 of the positive electrode active material, the side reaction of the battery can be reduced, and the capacity fade rate of the battery can be decreased, thereby being conducive to improving the cycle life of the battery. By further adjusting the volume distribution particle size Dv90 of the positive electrode active material, the positive electrode plate can also be allowed to have a high compaction density, thereby also being conducive to improving the energy density of the battery.

In some embodiments, the volume distribution particle size Dv10 of the positive electrode active material may be less than or equal to 3 $\mu$m. For example, it may be 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2 $\mu$m, 2.2 $\mu$m, 2.4 $\mu$m, 2.6 $\mu$m, 2.8 $\mu$m, 3 $\mu$m, or a range composed of any of the above values. Optionally, the volume distribution particle size Dv10 of the positive electrode active material may be 1 $\mu$m to 2 $\mu$m or 1.4 $\mu$m to 2 $\mu$m.

By further adjusting the volume distribution particle size Dv10 of the positive electrode active material, the side reaction of the battery can be reduced, and the capacity fade rate of the battery can be decreased, thereby being conducive to improving the cycle life of the battery; the positive electrode plate can also be allowed to have a high compaction density, thereby also being conducive to improving the energy density of the battery.

In some embodiments, the particle size distribution (Dv90 - Dv10)/Dv50 of the positive electrode active material may be 0.8-2.5. For example, it may be 0.8, 0.9, 1.0, 1.1, 1.2, 1.3, 1.43, 1.52, 1.6, 1.7, 1.8, 1.9, 2.0, 2.1, 2.2, 2.3, 2.4, 2.5, or a range composed of any of the above values, which is optionally 1.3-2.3, 1.3-2.1, or 1.3-2.0.

By further adjusting the particle size distribution (Dv90 - Dv10)/Dv50 of the positive electrode active material to be within the above range, the compaction density of the positive electrode plate can be improved, and the space utilization rate of the positive electrode active material can be improved, thereby helping to improve the energy density of the battery. By further adjusting the particle size distribution (Dv90 - Dv10)/Dv50 of the positive electrode active material to be within the above range, the contact resistance between particles of the positive electrode active material can be reduced, the impedance of the battery can be reduced, and thereby the low-temperature power performance of the battery can also be improved.

In some embodiments, the positive electrode active material may include a layered lithium-containing transition metal oxide with the single-crystal morphology.

The layered lithium-containing transition metal oxide with the single-crystal morphology usually has a small specific surface area and good interface stability and thermal stability, so that side reactions of the battery can be reduced, and good particle integrity can also be maintained during long-term charging and discharging and thereby the capacity fade rate of the battery can be reduced. Therefore, when the positive electrode active material includes the layered lithium-containing transition metal oxide with the single-crystal morphology, the cycle performance of the battery can be improved. However, the lithium ion diffusion coefficient of the layered lithium-containing transition metal oxide with the single-crystal morphology is generally low, thereby degrading the low-temperature power performance of the battery.

By adjusting the volume distribution particle size Dv50 of the positive electrode active material to be less than or equal to 6.5 $\mu$m, the low-temperature power performance of the battery can be improved, and meanwhile, the layered lithium-containing transition metal oxide with the single-crystal morphology can be allowed to fully exert its effect in improving the cycle performance of the battery.

In some embodiments, the volume distribution particle size Dv50 of the layered lithium-containing transition metal oxide with the single-crystal morphology may be less than or equal to 5 $\mu$m. For example, it may be 2 $\mu$m, 2.3 $\mu$m, 2.5 $\mu$m, 3 $\mu$m, 3.5 $\mu$m, 4 $\mu$m, 4.6 $\mu$m, 5 $\mu$m, or a range composed of any of the above values, which is optionally 2 $\mu$m to 4 $\mu$m and more optionally 2.3 $\mu$m to 3.5 $\mu$m.

In some embodiments, the volume distribution particle size Dv90 of the layered lithium-containing transition metal oxide with the single-crystal morphology may be less than or equal to 10 $\mu$m. For example, it may be 4.4 $\mu$m, 5 $\mu$m, 6 $\mu$m, 7 $\mu$m, 8 $\mu$m, 9 $\mu$m, 10 $\mu$m, or a range composed of any of the above values, which is optionally 4.4 $\mu$m to 8 $\mu$m and more optionally 4.4 $\mu$m to 7 $\mu$m.

In some embodiments, the volume distribution particle size Dv10 of the layered lithium-containing transition metal oxide with the single-crystal morphology may be less than or equal to 3 $\mu$m. For example, it may be 1 $\mu$m, 1.2 $\mu$m, 1.4 $\mu$m, 1.6 $\mu$m, 1.8 $\mu$m, 2 $\mu$m, 2.2 $\mu$m, 2.4 $\mu$m, 2.6 $\mu$m, 2.8 $\mu$m, 3 $\mu$m, or a range composed of any of the above values, which is optionally 1 $\mu$m to 2 $\mu$m and more optionally 1.4 $\mu$m to 2 $\mu$m.

Reducing the particle size of the layered lithium-containing transition metal oxide with the single-crystal morphology can further shorten the diffusion path of lithium ions in the positive electrode active material, and thus the positive electrode active material can quickly consume lithium ions in the electrolytic solution, so that the difference in the concentration of lithium ions between the negative electrode side and the positive electrode side of the separator can be further increased, the driving force for transmitting lithium ions from the negative electrode to the positive electrode is increased, and thereby the low-temperature power performance of the battery can be further improved. However, the cycle performance of the battery will be reduced to a certain extent.

By adjusting the volume distribution particle sizes Dv50, Dv90, and/or Dv10 of the layered lithium-containing transition metal oxide with the single-crystal morphology to be within the above ranges, the battery can be allowed to have both good low-temperature power performance and good cycle performance.

In some embodiments, the particle size distribution (Dv90 - Dv10)/Dv50 of the layered lithium-containing transition metal oxide with the single-crystal morphology may be 0.8-2.5. For example, it may be 0.8, 0.9, 1.0, 1.1, 1.2, 1.3, 1.43, 1.5, 1.6, 1.7, 1.8, 1.9, 2.0, 2.1, 2.2, 2.3, 2.4, 2.5, or a range composed of any of the above values, which is optionally 1.1-1.8, 1.2-1.6, 1.3-1.5, or 1.3-1.43.

By adjusting the particle size distribution (Dv90 - Dv10)/Dv50 of the layered lithium-containing transition metal oxide with the single-crystal morphology to be within the above range, the compaction density of the positive electrode plate can be improved, and the space utilization rate of the positive electrode active material can be improved, thereby helping to improve the energy density of the battery; the contact resistance between particles of the positive electrode active material can also be reduced, the impedance of the battery can be reduced, and thereby the low-temperature power performance of the battery can also be improved.

In some embodiments, the positive electrode active material may include a layered lithium-containing transition metal oxide with the single-crystal morphology, and the weight proportion of the layered lithium-containing transition metal oxide with the single-crystal morphology in the positive electrode active material may be 95 wt% or more; the volume distribution particle size Dv50 of the layered lithium-containing transition metal oxide with the single-crystal morphology may be less than or equal to 5 $\mu$m, optionally 2 $\mu$m to 4 $\mu$m, and more optionally 2.3 $\mu$m to 3.5 $\mu$m; the volume distribution particle size Dv90 of the layered lithium-containing transition metal oxide with the single-crystal morphology may be less than or equal to 10 $\mu$m, optionally 4.4 $\mu$m to 8 $\mu$m, and more optionally 4.4 $\mu$m to 7 $\mu$m; the volume distribution particle size Dv10 of the layered lithium-containing transition metal oxide with the single-crystal morphology may be less than or equal to 3 $\mu$m, optionally 1 $\mu$m to 2 $\mu$m, and more optionally 1.4 $\mu$m to 2 $\mu$m; the particle size distribution (Dv90 - Dv10)/Dv50 of the layered lithium-containing transition metal oxide with the single-crystal morphology may be 0.8 to 2.5, optionally 1.3 to 1.5, and more optionally 1.3 to 1.43. In this way, the battery can have high energy density, good low-temperature power performance, and good cycle performance.

In some embodiments, the positive electrode active material may include both the layered lithium-containing transition metal oxide with the single-crystal morphology and the layered lithium-containing transition metal oxide with the polycrystalline morphology described above.

The layered lithium-containing transition metal oxide with the polycrystalline morphology has a high lithium ion diffusion coefficient, good electrolytic solution wettability, and a short lithium ion diffusion path. Therefore, when the positive electrode active material includes both the layered lithium-containing transition metal oxide with the single-crystal morphology and the layered lithium-containing transition metal oxide with the polycrystalline morphology, the low-temperature power performance of the battery can be further improved.

In addition, compared with the case where only the layered lithium-containing transition metal oxide with the single-crystal morphology is included, allowing the positive electrode active material to include both the layered lithium-containing transition metal oxide with the single-crystal morphology and the layered lithium-containing transition metal oxide with the polycrystalline morphology can enable the positive electrode plate to have a higher compaction density. Therefore, when the positive electrode active material includes both the layered lithium-containing transition metal oxide with the single-crystal morphology and the layered lithium-containing transition metal oxide with the polycrystalline morphology, the energy density of the battery can also be improved.

In some embodiments, the volume distribution particle size Dv50 of the layered lithium-containing transition metal oxide with the polycrystalline morphology may be 7 $\mu$m-12 $\mu$m. For example, it may be 7 $\mu$m, 8 $\mu$m, 9 $\mu$m, 10 $\mu$m, 11 $\mu$m, 12 $\mu$m, or a range composed of any of the above values, optionally 8 $\mu$m to 10 $\mu$m.

In some embodiments, the volume distribution particle size Dv90 of the layered lithium-containing transition metal oxide with the polycrystalline morphology may be 12 $\mu$m to 20 $\mu$m. For example, it may be 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, or a range composed of any of the above values, which is optionally 13 $\mu$m to 18 $\mu$m.

In some embodiments, the volume distribution particle size Dv10 of the layered lithium-containing transition metal oxide with the polycrystalline morphology may be 2 $\mu$m to 6 $\mu$m. For example, it may be 2 $\mu$m, 3 $\mu$m, 4 $\mu$m, 5 $\mu$m, 6 $\mu$m, or a range composed of any of the above values, which is optionally 3 $\mu$m to 5 $\mu$m.

Reducing the particle size of the layered lithium-containing transition metal oxide with the polycrystalline morphology is beneficial to improving the low-temperature power performance of the battery; however, the energy density of the battery will also be reduced to a certain extent, and meanwhile, the manufacturing costs of the battery are greatly increased.

By adjusting the volume distribution particle sizes Dv50, Dv90, and/or Dv10 of the layered lithium-containing transition metal oxide with the polycrystalline morphology to be within the above ranges, the battery can be allowed to have high energy density, good low-temperature power performance, good cycle performance and low manufacturing costs.

In some embodiments, the particle size distribution (Dv90 - Dv10)/Dv50 of the layered lithium-containing transition metal oxide with the polycrystalline morphology may be 1.1-1.5. For example, it may be 1.1, 1.2, 1.3, 1.43, 1.5, or a range composed of any of the above values, which is optionally 1.2-1.4.

By adjusting the particle size distribution (Dv90 - Dv10)/Dv50 of the layered lithium-containing transition metal oxide with the polycrystalline morphology to be within the above range, the compaction density of the positive electrode plate can be improved, and the space utilization rate of the positive electrode active material can be improved, thereby helping to improve the energy density of the battery; the contact resistance between particles of the positive electrode active material can also be reduced, the impedance of the battery can be reduced, and thereby the low-temperature power performance of the battery can also be improved.

In some embodiments, the weight proportion of the layered lithium-containing transition metal oxide with the polycrystalline morphology in the positive electrode active material may be 20 wt% to 80 wt%. For example, it may be 20 wt%, 30 wt%, 40 wt%, 50 wt%, 60 wt%, 70 wt%, 80 wt%, or a range composed of any of the above values.

The increase in the content of the layered lithium-containing transition metal oxide with the polycrystalline morphology is beneficial to improving the low-temperature power performance of the battery. However, the cycle performance of the battery will be reduced to a certain extent.

By adjusting the weight proportion of the layered lithium-containing transition metal oxide with the polycrystalline morphology to be within the above range, the battery can be allowed to have high energy density, good low-temperature power performance, and good cycle performance.

In some embodiments, the positive electrode active material may include both the layered lithium-containing transition metal oxide with the single-crystal morphology and the layered lithium-containing transition metal oxide with the polycrystalline morphology described above; the weight proportion of the layered lithium-containing transition metal oxide with the polycrystalline morphology in the positive electrode active material may be 20 wt% to 80 wt%; the volume distribution particle size Dv50 of the layered lithium-containing transition metal oxide with the single-crystal morphology may be less than or equal to 5 $\mu$m, optionally 2 $\mu$m to 4 $\mu$m, and more optionally 2.3 $\mu$m to 3.5 $\mu$m; the volume distribution particle size Dv90 of the layered lithium-containing transition metal oxide with the single-crystal morphology may be less than or equal to 10 $\mu$m, optionally 4.4 $\mu$m to 8 $\mu$m, and more optionally 4.4 $\mu$m to 7 $\mu$m; the volume distribution particle size Dv10 of the layered lithium-containing transition metal oxide with the single-crystal morphology may be less than or equal to 3 $\mu$m, optionally 1 $\mu$m to 2 $\mu$m, and more optionally 1.4 $\mu$m to 2 $\mu$m; the particle size distribution (Dv90 - Dv10)/Dv50 of the layered lithium-containing transition metal oxide with the single-crystal morphology may be 0.8-2.5, optionally 1.3-1.5, and more optionally 1.3-1.43; the volume distribution particle size Dv50 of the layered lithium-containing transition metal oxide with the polycrystalline morphology may be 7 $\mu$m to 12 $\mu$m, optionally 8 $\mu$m to 10 $\mu$m; the volume distribution particle size Dv90 of the layered lithium-containing transition metal oxide with the polycrystalline morphology may be 12 $\mu$m to 20 $\mu$m, optionally 13 $\mu$m to 18 $\mu$m; the volume distribution particle size Dv10 of the layered lithium-containing transition metal oxide with the polycrystalline morphology may be 2 $\mu$m to 6 $\mu$m, optionally 3 $\mu$m to 5 $\mu$m; the particle size distribution (Dv90 - Dv10)/Dv50 of the layered lithium-containing transition metal oxide with the polycrystalline morphology may be 1.1-1.5, optionally 1.2-1.4. In this way, the battery can have low manufacturing costs, high energy density, good low-temperature power performance, and good cycle performance.

In some embodiments, the layered lithium-containing transition metal oxide may include a Ni element. The molar amount of the Ni element may account for 70% or more of the total molar amount of the transition metal elements in the layered lithium-containing transition metal oxide; optionally, the molar amount of the Ni element may account for 80% or more of the total molar amount of the transition metal elements in the layered lithium-containing transition metal oxide; more optionally, the molar amount of the Ni element may account for 90% or more of the total molar amount of the transition metal elements in the layered lithium-containing transition metal oxide. In this way, the energy density of the battery can be further improved.

In some embodiments, the layered lithium-containing transition metal oxide may include $Li_aNi_bCo_cM_dO_eA_f$, where: $0 < a \leq 1.2$; $0.8 \leq b < 1$, optionally, $0.9 \leq b < 1$; $0 < c < 1$; $0 < d < 1$; $1 \leq e \leq 2$; $0 \leq f \leq 1$; M includes, but is not limited to, one or more of Mn, Al, Zr, Zn, Cu, Cr, Mg, Fe, V, Ti, and B, and A includes, but is not limited to, one or more of N, F, S, and Cl. In this way, the energy density of the battery can be further improved.

In some embodiments, as an example, the layered lithium-containing transition metal oxide may include, but is not limited to, one or more of $LiNi_{0.8}Co_{0.1}Mn_{0.1}O_2$, $LiNi_{0.80}Co_{0.15}Al_{0.05}O_2$, $LiNi_{0.9}Co_{0.06}Mn_{0.04}O_2$, $LiNi_{0.92}Co_{0.06}Mn_{0.02}O_2$, and $LiNi_{0.96}Co_{0.02}Mn_{0.02}O_2$.

In some embodiments, the positive electrode film layer further optionally includes a positive electrode conductive agent. As an example, the positive electrode conductive agent may include, but is not limited to, one or more of superconducting carbon, conductive graphite, acetylene black, carbon black, Ketjen black, a carbon dot, a carbon nanotube, graphene, and a carbon nanofiber.

In some embodiments, the positive electrode film layer further optionally includes a positive electrode binder. As an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, a metal foil or a composite current collector may be used as the positive electrode current collector. As an example of the metal foil, an aluminum foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include, but is not limited to, one or more of polypropylene (PP), polyethylene terephthalate (PET), polybutylene terephthalate (PBT), polystyrene (PS), and polyethylene (PE).

The positive electrode current collector is provided with two surfaces opposite to each other in its own thickness direction, and the positive electrode film layer is disposed on any one or both of the two opposite surfaces of the positive electrode current collector.

The positive electrode film layer is usually formed by coating a positive electrode current collector with a positive electrode slurry, drying, and cold pressing. The positive electrode slurry is usually formed by dispersing a positive electrode active material, a positive electrode binder, a positive electrode conductive agent, and the like in a solvent and uniformly stirring. The solvent may be N-methylpyrrolidone (NMP) or deionized water, but is not limited thereto.

The Dv10, Dv50, and Dv90 of the positive electrode active material, the layered lithium-containing transition metal oxide with the single-crystal morphology, and the layered lithium-containing transition metal oxide with the polycrystalline morphology all have meanings well-known in the art and can be measured by instruments and methods known in the art. For example, the measurement may be conveniently performed with reference to GB/T 19077-2016 using a laser particle size analyzer (e.g., Malvern Mastersizer 3000). The physical definition of Dv90 is the particle size at which the cumulative volume distribution percentage of the material reaches 90%; the physical definition of Dv50 is the particle size at which the cumulative volume distribution percentage of the material reaches 50%; the physical definition of Dv10 is the particle size at which the cumulative volume distribution percentage of the material reaches 10%.

[Separator]

The separator includes a porous substrate and a porous coating disposed on at least one surface of the porous substrate, and the porous coating includes a fibrous material and a particulate filler.

In some embodiments, the fibrous material may include one or more of an organic material and an inorganic material.

Optionally, in some embodiments, the organic material may include one or more of nanocellulose, polytetrafluoroethylene nanofiber, and polyamide nanofiber.

Optionally, in some embodiments, the inorganic material may include one or more of halloysite nanotube, nanorod-shaped aluminum oxide, nanorod-shaped boehmite, nanorod-shaped silicon oxide, and glass fiber.

In some embodiments, the fibrous material may include nanocellulose.

The nanocellulose is a general term for cellulose with any dimension at the nanoscale (e.g., within 100 nm). It combines both the characteristics of cellulose and nanoparticles. The nanocellulose may be a polymer nanomaterial extracted from wood, cotton, etc., in nature by one or more means of chemistry, physics, biology, etc., and has the advantages of wide source, low costs, biodegradability, high modulus, high specific surface area, etc. Therefore, it is an excellent substitute for traditional petrochemical resources, and can effectively alleviate environmental pollution and the shortage of petrochemical resources. The nanocellulose also has good high-temperature resistance, and its volume change after heating is small, so that the heat resistance of the separator can be improved; meanwhile, the density of the nanocellulose is small, so that the weight of the battery can also be reduced, and the gravimetric energy density of the battery can be improved.

In addition, the structure formed by the interweaving of the nanocellulose and the particulate filler may have minute nanopores, so that current leakage can be reduced, and the separator can have both good electrolytic solution wettability and retention property and good voltage breakdown resistance.

Optionally, the nanocellulose may include a cellulose nanowhisker, which has the advantage of high crystallinity and thus can better improve the heat resistance of the separator and improve the thermal stability of the battery.

In some embodiments, the nanocellulose may include a hydroxyl group and a modifying group.

In some embodiments, the modifying group of the nanocellulose may include one or more of an amine group, a carboxyl group, an aldehyde group, a sulfonic acid group, a boric acid group, and a phosphoric acid group. Optionally, the modifying group of the nanocellulose may include one or more of a sulfonic acid group, a boric acid group, and a phosphoric acid group.

By allowing the nanocellulose to have the above specific modifying group, in one aspect, the heat resistance of the separator can be effectively improved and the thermal stability of the battery can be improved, and in another aspect, the bonding strength between the porous coating and the porous substrate can also be enhanced.

Allowing the nanocellulose to have the above specific modifying group also facilitates the interweaving of the nanocellulose and the particulate filler to achieve an integrated effect, so that the porous coating can have a stable spatial network structure, thereby helping to improve the electrolytic solution wettability and retention property of the separator and improve the ion transmission property and the voltage breakdown resistance of the separator; it is also conducive to compatibility with a high-voltage positive electrode active material, thereby further improving the energy density of the battery.

In addition, the presence of the modifying group can also reduce the proportion of the hydroxyl group. This can allow the porous coating slurry to have an appropriate viscosity and thereby facilitate the coating operation, so that the production efficiency of the separator and the uniformity of the porous coating can also be improved.

In some embodiments, the molar ratio of the modifying group to the hydroxyl group may be 1:4 to 4:1, optionally 2:3 to 7:3. When the molar ratio of the modifying group to the hydroxyl group is within the above range, the heat resistance, the ion transmission property, and the electrolytic solution wettability and retention property of the separator can be further improved, thereby helping to improve the thermal stability and the cycle performance of the battery.

The type of the modifying group in the nanocellulose may be determined by infrared spectroscopy. For example, the infrared spectrum of the material may be tested to determine the characteristic peaks it contains, and thus the type of the modifying group is determined. Specifically, the material may be analyzed by infrared spectroscopy with instruments and methods known in the art, for example, by using an infrared spectrometer (such as an IS10 Fourier transform infrared spectrometer of Nicolet, USA) according to general rules for infrared analysis in GB/T 6040-2019.

In some embodiments, the aspect ratio of the fibrous material may be 5-60, optionally 10-30. By adjusting the aspect ratio of the fibrous material to be within the above range, the fibrous material can form a three-dimensional framework structure, and the formed three-dimensional framework structure can also interweave with the particulate filler to achieve an integrated effect, so that the heat resistance of the separator and the electrolytic solution wettability and retention property of the separator can be improved, thereby helping to improve the thermal stability and cycle performance of the battery.

In some embodiments, the average length of the fibrous material may be 100 nm to 600 nm, optionally 200 nm to 450 nm. By adjusting the average length of the fibrous material to be within the above range, the fibrous material can form a three-dimensional framework structure, and the formed three-dimensional framework structure can also interweave with the particulate filler to achieve an integrated effect, so that the heat resistance and ion transmission property of the separator can be further improved, thereby helping to improve the thermal stability of the battery.

In some embodiments, the average diameter of the fibrous material may be 11 nm to 40 nm, optionally 12 nm to 34 nm. By adjusting the average diameter of the fibrous material to be within the above range, the fibrous material can form a three-dimensional framework structure, and the formed three-dimensional framework structure can also interweave with the particulate filler to achieve an integrated effect, so that the ion transmission property of the separator can be further improved, thereby helping to improve the cycle performance of the battery.

The average length and the average diameter of the fibrous material may be determined by the following method: A 3.6 mm × 3.6 mm sample is cut from any region of the separator, and the microscopic morphology and structure of the porous coating are characterized using a scanning electron microscope (e.g., ZEISS Sigma 300) under high vacuum mode with an operating voltage of 3 kV and a magnification of 30,000× to obtain an SEM image; based on the acquired SEM image, multiple test areas (e.g., 5 or more, each having a dimension of 0.5 $\mu$m × 0.5 $\mu$m) are selected for length measurement, and then the average value of the lengths of the fibrous material obtained from all the test areas is taken as the average length of the fibrous material; based on the acquired SEM image, multiple test areas (e.g., 5 or more, each having a dimension of 0.5 $\mu$m × 0.5 $\mu$m) are selected for diameter measurement using the Nano Measurer particle size distribution analysis software, and then the average value of the diameters of the fibrous material obtained from all the test areas is taken as the average diameter of the fibrous material.

In some embodiments, the weight content of the fibrous material in the porous coating may be less than or equal to 40 wt%, optionally 10 wt% to 30 wt%.

In some embodiments, the weight content of the particulate filler in the porous coating may be greater than or equal to 60 wt%, optionally 68 wt% to 88 wt%.

Allowing the weight content of the fibrous material and the particulate filler to be within the above range is beneficial to an appropriate viscosity of the porous coating slurry, thereby facilitating the coating operation. In addition, it is also beneficial to the interweaving of the three-dimensional framework structure formed by the fibrous material with the particulate filler to achieve an integrated effect, so that the porous coating can have a more stable spatial network structure, and the heat resistance, ion transmission property, electrolytic solution wettability and retention property, and voltage breakdown resistance of the separator can be further improved, thereby further improving the thermal stability and cycle performance of the battery.

In some embodiments, the nanocellulose may be obtained by the following method: A cellulose powder with a whiteness ≥ 80% is provided; the obtained cellulose powder is mixed and reacted with a modification solution, and then washing for impurity removal is performed to obtain cellulose nanowhiskers; the pH of the obtained cellulose nanowhiskers is adjusted to neutrality, and then grinding and cutting are performed to obtain the nanocellulose.

Optionally, the cellulose powder with a whiteness ≥ 80% may be commercially available, or may be obtained by a chemical method (for example, acidolysis, alkali treatment, or Tempo catalytic oxidation), a biological method (for example, enzyme treatment), a mechanical method (for example, ultrafine grinding, ultrasonic crushing, or high-pressure homogenization), or the like. The fiber raw material for preparing the above cellulose powder with a whiteness ≥ 80% may include plant fibers, such as one or more of fibers from plants of the genus Gossypium (e.g., a cotton fiber or a kapok fiber), fibers from bast plants (e.g., a sisal fiber, a ramie fiber, a jute fiber, a flax fiber, a hemp fiber, or an abaca fibers), palm fibers, wood fibers, bamboo fibers, and grass fibers.

In some embodiments, the above cellulose powder with a whiteness ≥ 80% may also be prepared in the following manner: A fiber raw material is subjected to opening and cleaning, and then cooked with an alkaline solution (for example, an aqueous NaOH solution having a concentration of 4 wt% to 20 wt%, optionally 5 wt% to 15 wt%), and then water washing for impurity removal (for example, performing water washing for 3-6 times), bleaching (for example, using sodium hypochlorite and/or hydrogen peroxide), acid washing for impurity removal, water washing for impurity removal, dewatering, and airflow drying are performed in sequence to obtain the cellulose powder.

In some embodiments, the modification solution may be an acid solution (e.g., an aqueous sulfuric acid solution, an aqueous boric acid solution, an aqueous phosphoric acid solution, or an aqueous acetic acid solution) or an alkaline solution (e.g., an organic solvent solution of urea). Optionally, the modification solution is an acid solution.

Optionally, the concentration of the acid solution may be 5 wt% to 80 wt%. When an aqueous sulfuric acid solution is used as the modification solution, the concentration of the acid solution may be 40 wt% to 80 wt%, and thus the cellulose powder having a sulfonic acid group may be obtained. When an aqueous boric acid solution is used as the modification solution, the concentration of the acid solution may be 5 wt% to 10 wt%, and thus the cellulose powder having a boric acid group may be obtained. When an aqueous phosphoric acid solution is used as the modification solution, the concentration of the acid solution may be 45 wt% to 75 wt%, and thus the cellulose powder having a phosphoric acid group may be obtained. When an aqueous acetic acid solution is used as the modification solution, the concentration of the acid solution may be 40 wt% to 80 wt%, and thus the cellulose powder having a carboxylic acid group may be obtained.

Optionally, the organic solvent solution of urea is a solution of urea in xylene, and thus the cellulose powder having an amine group may be obtained.

In some embodiments, the weight ratio of the cellulose powder to the modification solution may be 1:2.5 to 1:50, optionally 1:5 to 1:30.

When an aqueous sulfuric acid solution is used as the modification solution, the weight ratio of the cellulose powder to the acid solution may be 1:5 to 1:30. When an aqueous boric acid solution is used as the modification solution, the weight ratio of the cellulose powder to the acid solution may be 1:20 to 1:50. When an aqueous phosphoric acid solution is used as the modification solution, the weight ratio of the cellulose powder to the acid solution may be 1:5 to 1:30. When an aqueous acetic acid solution is used as the modification solution, the weight ratio of the cellulose powder to the acid solution may be 1:5 to 1:30. When an organic solvent solution of urea is used as the modification solution, the weight ratio of the cellulose powder to the organic solvent solution of urea may be 1:4 to 1:40.

In some embodiments, when the modification solution is an acid solution, the reaction may be performed at a temperature of not higher than 80 °C, optionally at 30 °C to 60 °C, and the reaction time for the cellulose powder and the modification solution may be 0.5 h to 4 h, optionally 1 h to 3 h.

In some embodiments, when the modification solution is an alkaline solution, the reaction may be performed at 100 °C to 145 °C, and the reaction time for the cellulose powder and the modification solution may be 1 h to 5 h.

In some embodiments, grinding may be performed by using a grinder, and cutting may be performed by using a high-pressure homogenizer. Nanocellulose with different average diameters and/or different average lengths can be obtained by adjusting the grinding parameters of the grinder (e.g., number of grindings or grinding time) as well as the cutting parameters of the high-pressure homogenizer.

In some embodiments, the particulate filler may include one or more of an organic particle, an inorganic particle, and an organic-inorganic framework material.

In some embodiments, the particulate filler may include a first component with a secondary particle morphology and a second component with a primary particle morphology.

The first component with the secondary particle morphology can better interweave with the three-dimensional framework structure formed by the fibrous material to achieve an integrated effect, so that the porous coating can have a more stable spatial network structure, thereby further improving the heat resistance of the separator and improving the thermal stability of the battery.

The second component with the primary particle morphology is beneficial to reducing the moisture content of the porous coating and improving the ion transmission property of the porous coating, thereby contributing to improving the cycle performance of the battery.

In some embodiments, the average particle size of the first component with the secondary particle morphology is less than the average particle size of the second component with the primary particle morphology. This is beneficial to better exerting the roles of the first component with the secondary particle morphology and the second component with the primary particle morphology.

In some embodiments, the average particle size of the first component with the secondary particle morphology is less than 200 nm, optionally 50 nm to 200 nm. Allowing the average particle size of the first component with the secondary particle morphology to be within the above range can enable the first component to have a high specific surface area and be better matched and interwoven with the three-dimensional framework structure formed by the fibrous material to achieve an integrated effect, so that the heat resistance of the separator and the electrolytic solution wettability and retention property of the separator can be increased, thereby helping to improve the thermal stability and cycle performance of the battery.

In some embodiments, the particle size of the primary particles in the first component forming the secondary particle morphology may be 8 nm to 30 nm, optionally 10 nm to 20 nm. Allowing the particle size of the primary particles in the first component forming the secondary particle morphology to be within the above range can enable the first component to have a good secondary particle morphology, which is beneficial to better interweaving of the first component with the three-dimensional framework structure formed by the fibrous material to achieve an integrated effect.

In some embodiments, the average particle size of the second component with the primary particle morphology is 200 nm to 800 nm, optionally 200 nm to 400 nm. Allowing the average particle size of the second component with the primary particle morphology to better exert its supporting role, so that the porous coating maintains a stable pore structure during long-term charging and discharging. This is beneficial to reducing the moisture content of the separator and promoting ion transmission, and can also improve the heat resistance of the separator.

The average particle sizes of the first component with the secondary particle morphology and the second component with the primary particle morphology may be measured using devices and methods known in the art. For example, a scanning electron microscope (e.g., ZEISS Sigma 300) may be used to characterize the microscopic morphology and structure of the porous coating in the sample. Referring to JY/T 0584-2020, a scanning electron microscope (SEM) image of the porous coating of the separator is acquired, and the lengths of the longest diagonals of the particles are measured based on the SEM image and then the average value is taken, where the number of the selected particles may be 100 or more.

In some embodiments, the weight content of the first component with the secondary particle morphology in the porous coating may be greater than the weight content of the second component with the primary particle morphology in the porous coating. This is beneficial to better exerting the roles of the first component with the secondary particle morphology and the second component with the primary particle morphology.

In some embodiments, the weight content of the first component with the secondary particle morphology in the porous coating may be 20 wt% to 85 wt%. Allowing the weight content of the first component with the secondary particle morphology to be within the above range is beneficial to an appropriate viscosity of the porous coating slurry, thereby further facilitating the coating operation. In addition, it is also beneficial to the interweaving with the three-dimensional framework structure formed by the fibrous material to achieve an integrated effect, so that the porous coating can have a more stable spatial network structure, and the tensile strength, puncture resistance, and resistance to external force compression of the separator can be further improved.

In some embodiments, the weight content of the second component with the primary particle morphology in the porous coating may be 5 wt% to 60 wt%. Allowing the weight content of the second component with the primary particle morphology to be within the above range can enable the second component with the primary particle morphology to better exert its supporting role, so that the porous coating maintains a stable pore structure during long-term charging and discharging. This is beneficial to reducing the moisture content of the separator and promoting ion transmission, and can also improve the heat resistance of the separator.

In some embodiments, the first component with the secondary particle morphology may include one or more of inorganic particles and organic particles.

Optionally, the inorganic particles include one or more of boehmite ($\gamma$-AlOOH), aluminum oxide ($Al_2O_3$), barium sulfate ($BaSO_4$), magnesium oxide (MgO), magnesium hydroxide ($Mg(OH)_2$), silicon-oxygen compound $SiO_x$ ($0 < x \leq 2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), hafnium dioxide ($HfO_2$), cerium oxide ($CeO_2$), zirconium titanate ($ZrTiO_3$), barium titanate ($BaTiO_3$), and magnesium fluoride ($MgF_2$). More optionally, the inorganic particles include one or more of boehmite ($\gamma$-AlOOH), aluminum oxide ($Al_2O_3$), barium sulfate ($BaSO_4$), magnesium oxide (MgO), silicon-oxygen compound $SiO_x$ ($0 < x \leq 2$), titanium oxide ($TiO_2$), zinc oxide (ZnO), cerium oxide ($CeO_2$), and barium titanate ($BaTiO_3$).

Optionally, the organic particle includes one or more of polystyrene and polyacrylic acid wax.

In some embodiments, the first component with the secondary particle morphology may include inorganic particles with a secondary particle morphology, and the crystal form of the inorganic particles with the secondary particle morphology includes at least two of crystal form $\alpha$, crystal form $\theta$, crystal form $\gamma$, and crystal form $\eta$. Optionally, the crystal form of the inorganic particles with the secondary particle morphology includes at least two of crystal form $\alpha$, crystal form $\theta$, and crystal form $\gamma$.

The inorganic particle with the secondary particle morphology having the crystal form $\alpha$ has diffraction peaks at 2θ of 57.48°±0.2° and 43.34°±0.2° in an X-ray diffraction pattern measured by using an X-ray diffractometer. In some embodiments, the weight content of the inorganic particle with the secondary particle morphology having the crystal form $\alpha$ in the inorganic particles with the secondary particle morphology may be ≥ 1.2 wt%, optionally 1.2 wt% to 10 wt%, and more optionally 1.2 wt% to 5 wt%, based on the total weight of the inorganic particles with the secondary particle morphology.

The inorganic particle with the secondary particle morphology having the crystal form $\theta$ has diffraction peaks at 2θ of 36.68°±0.2° and 31.21°±0.2° in an X-ray diffraction pattern measured by using an X-ray diffractometer. In some embodiments, the weight content of the inorganic particle with the secondary particle morphology having the crystal form $\theta$ in the inorganic particles with the secondary particle morphology may be ≥ 50 wt%, optionally 60 wt% to 85 wt%, and more optionally 60 wt% to 82.5 wt%, based on the total weight of the inorganic particles with the secondary particle morphology.

The inorganic particle with the secondary particle morphology having the crystal form $\gamma$ has diffraction peaks at 2θ of 66.95°±0.2° and 45.91°±0.2° in an X-ray diffraction pattern measured by using an X-ray diffractometer. In some embodiments, the weight content of the inorganic particle with the secondary particle morphology having the crystal form $\gamma$ in the inorganic particles with the secondary particle morphology may be ≥ 10 wt%, optionally 15 wt% to 60 wt%, and more optionally 15 wt% to 35 wt%, based on the total weight of the inorganic particles with the secondary particle morphology.

The inorganic particle with the secondary particle morphology having the crystal form $\eta$ has diffraction peaks at 2θ of 31.89°±0.2° and 19.37°±0.2° in an X-ray diffraction pattern measured by using an X-ray diffractometer. In some embodiments, the weight content of the inorganic particle with the secondary particle morphology having the crystal form $\eta$ in the inorganic particles with the secondary particle morphology may be ≤ 5 wt%, optionally ≤ 2 wt%, and more optionally ≤ 1 wt%, based on the total weight of the inorganic particles with the secondary particle morphology.

The inorganic particle with the secondary particle morphology having the crystal form $\alpha$ has the advantages of high hardness, good heat resistance, low dielectric constant, high safety and large true density; the inorganic particle with the secondary particle morphology having the crystal form $\theta$ has a moderate specific surface area and hardness, so that the heat resistance and ion transmission property of the separator can be better improved at the same time; the inorganic particles with the secondary particle morphology having the crystal form $\gamma$ and crystal form $\eta$ have the advantage of large specific surface area.

Therefore, selecting the inorganic particles with the secondary particle morphology having different crystal forms helps to improve at least one of the heat resistance, the bonding strength, and the electrolytic solution wettability and retention property of the separator.

In some embodiments, the first component with the secondary particle morphology may include inorganic particles with a secondary particle morphology; the crystal form of the inorganic particles with the secondary particle morphology includes crystal form $\alpha$, crystal form $\theta$, crystal form $\gamma$, and crystal form $\eta$, and the weight content of the inorganic particle with the secondary particle morphology having the crystal form $\alpha$ in the inorganic particles with the secondary particle morphology may be 1.2 wt% to 5 wt%, the weight content of the inorganic particle with the secondary particle morphology having the crystal form $\theta$ in the inorganic particles with the secondary particle morphology may be 60 wt% to 82.5 wt%, the weight content of the inorganic particle with the secondary particle morphology having the crystal form $\gamma$ in the inorganic particles with the secondary particle morphology may be 15 wt% to 35 wt%, and the weight content of the inorganic particle with the secondary particle morphology having the crystal form $\eta$ in the inorganic particles with the secondary particle morphology may be ≤ 1 wt%, all based on the total weight of the inorganic particles with the secondary particle morphology.

The X-ray diffraction pattern of the inorganic particles with the secondary particle morphology may be obtained by the following test method: The inorganic particles with the secondary particle morphology are dried, ground in a mortar (such as an agate mortar) for 30 min, and then tested with an X-ray diffractometer (such as Miniflex 600-C) to obtain the X-ray diffraction pattern. The test is performed using a Cu target and a Ni filter at a tube pressure of 40 KV, a tube current of 15 mA, and a continuous scanning range of 5° to 80°.

In some embodiments, the first component with the secondary particle morphology may include inorganic particles with a secondary particle morphology, and the inorganic particles with the secondary particle morphology may be prepared by the following method: A precursor solution of the inorganic particles is oxidized by high-pressure sputtering and then heated at 600 °C to 900 °C (for example, 1 h to 3 h) to form small particles, followed by drying and shaping at 150 °C to 250 °C (for example, 30 min to 60 min) to obtain the inorganic particles with the secondary particle morphology. The average particle size of the inorganic particles with the secondary particle morphology can be adjusted by adjusting sputtering parameters, such as temperature and time.

In some embodiments, the shape of the first component with the secondary particle morphology may include one or more of string-like, chain-like, amorphous, spherical, spheroid-like, and pyramidal.

In some embodiments, the second component with the primary particle morphology includes inorganic particles with a primary particle morphology.

Optionally, the inorganic particles with the primary particle morphology may include one or more of inorganic particles having a dielectric constant of 5 or more, inorganic particles having ion conductivity but not storing ions, and inorganic particles capable of undergoing electrochemical reactions.

Optionally, the inorganic particles having a dielectric constant of 5 or more includes one or more of the following: boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, $Pb(Zr,Ti)O_3$ (abbreviated as PZT), $Pb_{1-m}La_mZr_{1-n}Ti_nO_3$ (abbreviated as PLZT, $0 < m < 1$, and $0 < n < 1$), $Pb(Mg_3Nb_{2/3})O_3$-$PbTiO_3$ (abbreviated as PMN-PT), and respective modified inorganic particles thereof. Optionally, the manner of modification of the respective inorganic particles may be chemical modification and/or physical modification. Chemical modification includes coupling agent modification (such as using a silane coupling agent, a titanate coupling agent, etc.), surfactant modification, polymer grafting modification, etc. Physical modification includes mechanical dispersion, ultrasonic dispersion, high energy treatment, etc. The agglomeration of inorganic particles can be reduced by the modification treatment, thereby enabling the porous coating to have a more stable and uniform spatial network structure; in addition, by selecting a coupling agent, a surfactant, or a polymer having a specific functional group to modify the inorganic particles, the electrolytic solution wettability and retention property of the porous coating and the adhesion of the porous coating to the porous substrate can also be improved.

Optionally, the inorganic particles having ion conductivity but not storing ions may include one or more of the following: $Li_3PO_4$, lithium titanium phosphate $Li_{x1}Ti_{y1}(PO_4)_3$, lithium aluminum titanium phosphate $Li_{x2}Al_{y2}Ti_{z1}(PO_4)_3$, $(LiAlTiP)_{x3}O_{y3}$ type glass, lithium lanthanum titanate $Li_{x4}La_{y4}TiO_3$, lithium germanium phosphorus sulfide $Li_{x5}Ge_{y5}P_{z2}S_w$, lithium nitride $Li_{x6}N_{y6}$, $SiS_2$ type glass $Li_{x7}Si_{y7}S_{z3}$, and $P_2S_5$ type glass $Li_{x8}P_{y8}S_{z4}$, where $0 < x1 < 2$, $0 < y1 < 3$, $0 < x2 < 2$, $0 < y2 < 1$, $0 < z1 < 3$, $0 < x3 < 4$, $0 < y3 < 13$, $0 < x4 < 2$, $0 < y4 < 3$, $0 < x5 < 4$, $0 < y5 < 1$, $0 < z2 < 1$, $0 < w < 5$, $0 < x6 < 4$, $0 < y6 < 2$, $0 < x7 < 3$, $0 < y7 < 2$, $0 < z3 < 4$, $0 < x8 < 3$, $0 < y8 < 3$, and $0 < z4 < 7$. Therefore, the ion transmission property of the separator can be further improved.

Optionally, the inorganic particles capable of undergoing electrochemical reactions may include one or more of the following: a lithium-containing transition metal oxide, a lithium-containing phosphate, a carbon-based material, a silicon-based material, a tin-based material, and a lithium titanium compound.

In some embodiments, the second component with the primary particle morphology includes inorganic particles with a primary particle morphology, and the crystal form of the inorganic particles with the primary particle morphology may include one or more of crystal form $\alpha$ and crystal form $\gamma$, optionally including the crystal form $\alpha$. The inorganic particle with the primary particle morphology having crystal form $\alpha$ has the advantages of high hardness, good heat resistance, low dielectric constant, high safety, and large true density, thereby further improving the heat resistance of the porous coating.

In some embodiments, the crystal form of the inorganic particles with the primary particle morphology includes the crystal form $\alpha$, and the weight content of the inorganic particle with the primary particle morphology having the crystal form $\alpha$ in the inorganic particles with the primary particle morphology may be $\geq 90$ wt%, optionally 95 wt% to 100 wt%, based on the total weight of the inorganic particles with the primary particle morphology.

In some embodiments, the shape of the second component with the primary particle morphology may include at least one of spherical, dumbbell-like, and polygonal.

In some embodiments, the porous coating may further include a non-particulate binder. The present application does not particularly limit the type of the non-particulate binder, and any material known to have good adhesion may be selected. Optionally, the non-particulate binder includes an aqueous solution-type binder, which has the advantages of good thermodynamic stability and environmental friendliness, thereby facilitating the preparation and coating operation of the porous coating slurry. As an example, the aqueous solution-type binder may include, but is not limited to, one or more of aqueous solution-type acrylic resins (e.g., homopolymers of acrylic acid, methacrylic acid, and sodium acrylate monomers or their copolymers with other comonomers), polyvinyl alcohol (PVA), isobutylene-maleic anhydride copolymer, and polyacrylamide.

Optionally, the content of the non-particulate binder in the porous coating may be less than or equal to 3 wt% based on the total weight of the porous coating. The porous coating can have a stable spatial network structure, so that the separator can maintain high adhesion while reducing the amount of the binder.

In some embodiments, the thickness of the porous coating may be less than or equal to 3 $\mu$m, optionally 0.5 $\mu$m to 2 $\mu$m. This is beneficial to enhancing the energy density of the battery. In the present application, the thickness of the porous coating refers to the thickness of the porous coating located on one side of the porous substrate.

In some embodiments, the separator may further include an adhesive layer. The adhesive layer may be disposed on at least a part of the surface of the porous coating and/or at least a part of the surface of the porous substrate on which the porous coating is not disposed. The adhesive layer can not only prevent the porous coating from falling off and improve the reliability of the battery, but also improve the interface between the separator and the electrode and improve the cycle performance of the battery.

Optionally, the adhesive layer may include a particulate binder.

Optionally, the binder includes one or more of acrylate monomer homopolymers or copolymers, acrylic acid monomer homopolymers or copolymers, and fluorinated olefin monomer homopolymers or copolymers. The comonomers include, but are not limited to, one or more of the following: acrylate monomers, acrylic acid monomers, olefin monomers, halogen-containing olefin monomers, fluoroether monomers, and the like.

Optionally, the binder includes a vinylidene fluoride-based polymer, such as a homopolymer of vinylidene fluoride monomer (VDF) and/or a copolymer of vinylidene fluoride monomer with a comonomer. The comonomer may be one or more of olefin monomers, fluorinated olefin monomers, chlorinated olefin monomers, acrylate monomers, acrylic acid monomers, and fluoroether monomers. Optionally, the comonomer may include one or more of the following: trifluoroethylene (VF3), chlorotrifluoroethylene (CTFE), 1,2-difluoroethylene, tetrafluoroethylene (TFE), hexafluoropropylene (HFP), perfluoro(alkyl vinyl) ethers (e.g., perfluoro(methyl vinyl) ether PMVE, perfluoro(ethyl vinyl) ether PEVE, or perfluoro(propyl vinyl) ether PPVE), perfluoro(1,3-dioxole), and perfluoro(2,2-dimethyl-1,3-dioxole) (PDD).

The present application does not particularly limit the material of the porous substrate, and any substrate known to have good chemical stability and mechanical stability may be selected. For example, the porous substrate may include one or more of a porous polyolefin-based resin film (for example, one or more of polyethylene, polypropylene, and polyvinylidene fluoride), a porous glass fiber, and a porous non-woven fabric. The porous substrate may be a single-layer film or a multi-layer composite film. When the porous substrate is a multi-layer composite film, the materials of the layers may be the same or different.

In some embodiments, the thickness of the porous substrate may be less than or equal to 5.5 $\mu$m, optionally 3 $\mu$m to 5 $\mu$m. The porous coating provided in the embodiments of the present application helps to improve the heat resistance of the separator, so that a thinner porous substrate can be selected, thereby helping to improve the energy density of the battery.

In some embodiments, the machine direction thermal shrinkage of the separator at 150 °C for 0.5 h may be less than or equal to 5%, optionally 0.5% to 3%.

In some embodiments, the transverse direction thermal shrinkage of the separator at 150 °C for 0.5 h may be less than or equal to 5%, optionally 0.5% to 3%.

At a high temperature of 150 °C, the separator has a low thermal shrinkage in both the transverse direction and the machine direction, thereby improving the thermal stability and reliability of the battery.

The thermal shrinkage of the separator may be tested by the following method: The separator is punched into samples with a width of 50 mm and a length of 100 mm using a punching machine, a sample is placed and fixed on an A4 paper, and then the A4 paper with the sample is placed on a corrugated cardboard with a thickness of 1 mm to 5 mm; the temperature of the forced-air oven is set to 150 °C, and after the temperature reaches the set temperature and is stable for 30 min, the corrugated cardboard on which the A4 paper is placed is put into the oven and timing is started, and after the set time (0.5 h in the present application) is reached, the width a1 and the length a2 of the separator are measured. The transverse direction thermal shrinkage of the separator at 150 °C for 0.5 h = [(50 - a1)/50] $\times$ 100%, and the machine direction thermal shrinkage of the separator at 150 °C for 0.5 h = [(100 - a2)/100] $\times$ 100%.

In some embodiments, the air permeability of the separator may be less than or equal to 300 s/100 mL, optionally 100 s/100 mL to 250 s/100 mL.

The air permeability of the separator may be tested by the following method: At 25 °C, the time required for 100 mL of air to pass through the separator is determined. The testing instrument may be the Oken type air-permeability tester (Kumagai Riki Kogyo, KRK).

In some embodiments, the porosity of the separator may be 30% to 35%, optionally 30% to 33%.

The porosity of the separator may be tested with reference to GB/T 24586-2009. The test method may include the following steps: The separator is cut into discs with a certain area, the thickness is measured, and the apparent volume $V_1$ of the separator is calculated according to the formula for calculating the volume of a cylinder; with reference to GB/T 24586-2009, the real volume $V_2$ of the separator is measured using a true density tester by employing the gas displacement method with inert nitrogen gas as the medium. The porosity of the separator = $(V_1 - V_2)/V_1 \times 100\%$. The testing instrument may be the AccuPyc II 1340 automatic true density analyzer from Micromeritics, USA.

It should be noted that parameters of the porous coating of the separator are all the parameters of the porous coating on one side of the porous substrate. When the porous coating is disposed on both sides of the porous substrate, as long as the parameters of the porous coating on either side meet the requirements of the present application, the case is deemed to fall within the protection scope of the present application.

[Negative Electrode Plate]

In some embodiments, the negative electrode plate may include a negative electrode current collector and a negative electrode film layer disposed on at least one surface of the negative electrode current collector. The negative electrode film layer includes a negative electrode active material.

The negative electrode current collector is provided with two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. As an example of the metal foil, a copper foil, a copper alloy foil, an aluminum foil, or an aluminum alloy foil may be used. The composite current collector may include a polymer material base layer and a metal material layer formed on at least one surface of the polymer material base layer. As an example, the metal material may include, but is not limited to, one or more of copper, a copper alloy, nickel, a nickel alloy, titanium, a titanium alloy, silver, and a silver alloy. As an example, the polymer material base layer may include, but is not limited to, one or more of polypropylene (PP), polyethylene terephthalate (PET), polybutylene terephthalate (PBT), polystyrene (PS), and polyethylene (PE).

The negative electrode active material may be any negative electrode active material known in the art for use in batteries. In some embodiments, as an example, the negative electrode active material may include, but is not limited to, one or more of natural graphite, artificial graphite, soft carbon, hard carbon, a silicon-based material, a tin-based material, and lithium titanate.

As an example, the silicon-based material may include, but is not limited to, one or more of elemental silicon, an oxide of silicon, a silicon-carbon composite, a silicon-nitrogen composite, and a silicon alloy material. In some embodiments, the silicon-based material may include a silicon element and one or more of an alkali metal element and an alkaline earth metal element. Optionally, the alkali metal element includes Li. Optionally, the alkaline earth metal element includes Mg. As an example, the silicon-based material may be a silicon-based material pre-embedded with an alkali metal and/or an alkaline earth metal. For example, it may be a silicon-based material pre-embedded with Li and/or Mg.

As an example, the tin-based material may include, but is not limited to, one or more of elemental tin, an oxide of tin, and a tin alloy material.

In some embodiments, the negative electrode film layer further optionally includes a negative electrode binder. As an example, the negative electrode binder may include, but is not limited to, one or more of styrene-butadiene rubber (SBR), water-soluble unsaturated resin SR-1B, aqueous acrylic resin (e.g., polyacrylic acid (PAA), poly(methacrylic acid) (PMAA), and sodium polyacrylate (PAAS)), polyacrylamide (PAM), polyvinyl alcohol (PVA), sodium alginate (SA), and carboxymethyl chitosan (CMCS).

In some embodiments, the negative electrode film layer further optionally includes a negative electrode conductive agent. As an example, the negative electrode conductive agent may include, but is not limited to, one or more of superconducting carbon, conductive graphite, acetylene black, carbon black, Ketjen black, a carbon dot, a carbon nanotube, graphene, and a carbon nanofiber.

In some embodiments, the negative electrode film layer further optionally includes other auxiliary agents. As an example, other auxiliary agents may include a thickener, such as sodium carboxymethylcellulose (CMC) and PTC thermistor materials.

The negative electrode plate does not exclude additional functional layers other than the negative electrode film layer. For example, in some embodiments, the negative electrode plate may further include a conductive bottom coating (e.g., composed of a conductive agent and a binder) interposed between the negative electrode current collector and the negative electrode film layer and disposed on the surface of the negative electrode current collector. In some embodiments, the negative electrode plate may further include a protective layer covering the surface of the negative electrode film layer.

In some embodiments, the negative electrode plate may be prepared by the following method: A negative electrode active material, optionally a negative electrode binder, optionally a negative electrode conductive agent, and optionally other auxiliary agents are dispersed in a solvent, and the mixture is uniformly stirred to form a negative electrode slurry; the negative electrode slurry is applied on the negative electrode current collector, and procedures including drying, cold pressing, and the like, are performed to form the negative electrode plate. The solvent may be N-methylpyrrolidone (NMP) or deionized water, but is not limited thereto.

[Electrolyte]

A battery cell includes an electrolyte.

The electrolyte conducts ions between the positive electrode plate and the negative electrode plate. The present application has no specific limitations on the type of the electrolyte, which can be selected according to needs. For example, the electrolyte may include one or more of a solid-state electrolyte, a gel electrolyte, and a liquid-state electrolyte (i.e., an electrolytic solution).

In some embodiments, the electrolyte may be an electrolytic solution, which may include an electrolyte salt and an organic solvent.

In some embodiments, the electrolyte salt may include, but is not limited to, one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP).

In some embodiments, the organic solvent may include, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive or a positive electrode film-forming additive, or may include an additive capable of improving certain properties of the battery, such as an additive for improving the overcharge performance of the battery, an additive for improving the high-temperature performance of the battery, or an additive for improving the low-temperature performance of the battery.

In some embodiments, the upper charge cut-off voltage of the battery cell may be greater than or equal to 4.25 V, optionally 4.30 V to 4.45 V. This can allow the battery to have a high energy density.

Methods for preparing a battery cell are well known. In some embodiments, the positive electrode plate, the separator, the negative electrode plate, and the electrolytic solution may be assembled to form a battery cell. As an example, the positive electrode plate, the separator, and the negative electrode plate may form an electrode assembly through a winding process and/or a stacking process. The electrode assembly is placed in an outer packaging, followed by drying and then injection of the electrolytic solution described above. After procedures such as vacuum packaging, standing, and formation, a battery cell is obtained. A plurality of battery cells may be further connected in series or in parallel or in series-parallel to form a battery module. A plurality of battery modules may be further connected in series or in parallel or in series-parallel to form a battery pack. In some embodiments, a plurality of battery cells may also directly constitute a battery pack.

Embodiments of the present application further provide an electric device, which includes the battery provided in the embodiments of the present application. The battery may be used as a power source for the electric device, or as an energy storage unit for the electric device. The electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

The electric device can select a type of battery according to its use requirements, such as a battery cell, a battery module, or a battery pack.

FIG. 6 is a schematic view of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a laptop computer, or the like. The electric device is generally required to be light and thin, and a battery cell may thus be used as the power source.

## Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on weight, and all reagents used in the examples are commercially available or synthesized according to conventional methods and can be used directly without further treatment, and the instruments used in the examples are all commercially available.

## Preparation of nanocellulose

The cotton linter was opened and cleaned by a cotton opener and then cooked with a 5 wt% aqueous NaOH solution at 150 °C for 2 h, and then water washing for impurity removal (water washing for 3 times), bleaching with sodium hypochlorite, washing with dilute hydrochloric acid for impurity removal, water washing for impurity removal (water washing for 1 time), dewatering, and airflow drying were performed in sequence to obtain a cotton cellulose powder with a whiteness of $\geq$ 85%.

1 kg of the obtained cotton cellulose powder was mixed with 30 kg of a 60 wt% aqueous sulfuric acid solution, and the mixture was reacted at 55 °C to 60 °C for 1 h to 1.5 h. After the reaction was completed, 3 times of water washing for impurity removal, filtering, and disacidifying for impurity removal were performed in sequence to obtain cellulose nanowhiskers having a sulfonic acid group.

The pH of the cellulose nanowhiskers having a sulfonic acid group was first adjusted to neutrality with a 10 wt% aqueous NaOH solution, then ground with a grinder, and then subjected to nano-scale cutting with a high-pressure homogenizer device to obtain nanocellulose having a modifying group sulfonic acid group, with the molar ratio of the sulfonic acid group to the hydroxyl group being 5:3.

During the preparation, nanocellulose with different average diameters and/or different average lengths can be obtained by adjusting the parameters of the grinder for processing as well as the cutting parameters of the high-pressure homogenizer device.

The molar ratio of the modifying group to the surface hydroxyl group in the nanocellulose can be measured by the following method: According to the phthalic anhydride method in GB/T 12008.3-2009, the hydroxyl values (the amount of potassium hydroxide in milligrams that is equivalent to the hydroxyl group content per gram of the sample) of the raw material cellulose and the nanocellulose were obtained, and the obtained numerical values were expressed in mg KOH/g, which was converted into mmol/g as the hydroxyl group content. The content of the modifying group (i.e., the content of the modified hydroxyl group) can be obtained by subtracting the hydroxyl group content of the nanocellulose from the hydroxyl group content of the raw material cellulose, thereby calculating the molar ratio of the modifying group to the hydroxyl group.

**Example 1**

Preparation of positive electrode plate

A positive electrode active material $LiNi_{0.9}Co_{0.06}Mn_{0.04}O_2$, a conductive agent Super P, and a binder polyvinylidene fluoride were mixed at a weight ratio of 96.5:1.5:2, an appropriate amount of solvent NMP was added, and the mixture was stirred uniformly to obtain a positive electrode slurry. The positive electrode slurry was applied on two surfaces of a positive electrode current collector aluminum foil, and the aluminum foil was then subjected to drying and cold pressing to obtain the positive electrode plate.

The positive electrode active material $LiNi_{0.9}Co_{0.06}Mn_{0.04}O_2$ had a single-crystal morphology, the volume distribution particle sizes Dv50, Dv90, and Dv10 of the positive electrode active material were 2.3 $\mu$m, 4.4 $\mu$m, and 1.4 $\mu$m, respectively, and (Dv90 - Dv10)/Dv50 was 1.30.

Preparation of negative electrode plate

A negative electrode active material artificial graphite, a conductive agent carbon black (Super P), a binder styrene-butadiene rubber (SBR), and sodium carboxymethylcellulose (CMC) were mixed uniformly in an appropriate amount of solvent deionized water at a weight ratio of 96.4:0.7:1.8:1.1 to obtain a negative electrode slurry. The negative electrode slurry was applied on a negative electrode current collector copper foil, and the copper foil was then subjected to procedures including drying, cold pressing, slitting, and cutting to obtain the negative electrode plate.

Preparation of separator

A PE porous substrate having a thickness of 5 $\mu$m was provided.

Preparation of porous coating slurry: Nanocellulose, a first component aluminum oxide, a second component aluminum oxide, and a binder polyacrylic acid were uniformly mixed in an appropriate amount of solvent deionized water at a weight ratio of 20:55:23:2 to obtain the porous coating slurry.

The nanocellulose had an average length of 420 nm, an average diameter of 24 nm, and an aspect ratio of 17.5.

The first component aluminum oxide had a secondary particle morphology and its average particle size was 150 nm, and the contents of crystal form $\alpha$, crystal form $\theta$, crystal form $\gamma$, and crystal form $\eta$ in the first component aluminum oxide were 1.5 wt%, 74.7 wt%, 23.3 wt%, and 0.5 wt%, respectively, based on the total weight of the first component aluminum oxide.

The second component aluminum oxide had a primary particle morphology and its average particle size was 350 nm, and the crystal form of the second component aluminum oxide was mainly crystal form $\alpha$, with a weight proportion of the crystal form $\alpha$ being 99 wt% or more, based on the total weight of the second component aluminum oxide.

Preparation of adhesive layer slurry: Vinylidene fluoride monomer (VDF) homopolymer particles, polymethyl methacrylate, a dispersant sodium carboxymethylcellulose (CMC), and a surfactant were uniformly mixed in an appropriate amount of solvent deionized water at a weight ratio of 87:8:3:2 to obtain the adhesive layer slurry.

Coating: The prepared porous coating slurry was applied on one surface of the PE porous substrate with a coater, the adhesive layer slurry was applied on the porous coating and the surface of the PE porous substrate not coated with the porous coating slurry, and then procedures including drying and slitting were performed to obtain the separator. The thickness of the porous coating was 0.8 $\mu$m, and the total thickness of the separator was 8 $\mu$m.

Preparation of electrolytic solution

Ethylene carbonate (EC) and ethyl methyl carbonate (EMC) were mixed at a weight ratio of 30:70 to obtain an organic solvent, and fully dried $LiPF_6$ was dissolved in the above organic solvent to prepare an electrolytic solution having a concentration of 1 mol/L.

Preparation of battery

The positive electrode plate, the separator, and the negative electrode plate were stacked in sequence and wound to obtain an electrode assembly, with the porous coating of the separator facing the positive electrode plate. The electrode assembly was placed into an outer packaging, followed by drying and injection of the electrolytic solution. After procedures such as vacuum packaging, standing, formation, and shaping, a battery was obtained. The battery had a dimension of 50 mm $\times$ 194 mm $\times$ 110 mm.

**Comparative Example 1**

The battery was prepared by a method similar to that of Example 1, except that the preparation process of the separator was different.

A PE porous substrate having a thickness of 7 $\mu$m was provided.

Preparation of porous coating slurry: Aluminum oxide and a binder polyacrylic acid were uniformly mixed in an appropriate amount of solvent deionized water at a weight ratio of 94:6 to obtain the porous coating slurry. The aluminum oxide had a primary particle morphology and its volume distribution particle size Dv50 was 800 nm, and the crystal form of aluminum oxide was mainly crystal form $\alpha$, with a weight proportion of the crystal form $\alpha$ being 99 wt% or more, based on the total weight of aluminum oxide.

Preparation of adhesive layer slurry: Vinylidene fluoride monomer (VDF) homopolymer particles, polymethyl methacrylate, a dispersant sodium carboxymethylcellulose (CMC), and a surfactant were uniformly mixed in an appropriate amount of solvent deionized water at a weight ratio of 87:8:3:2 to obtain the adhesive layer slurry.

Coating: The prepared porous coating slurry was applied on both surfaces of the PE porous substrate with a coater, the adhesive layer slurry was applied on the porous coating, and then procedures including drying and slitting were performed to obtain the separator. The thickness of each porous coating was 1.5 $\mu$m, and the total thickness of the separator was 12 $\mu$m.

Performance test of separator

The porosity of the separator was tested with reference to GB/T 24586-2009. The test method is as follows: The separator was cut into discs with a certain area, the thickness was measured, and the apparent volume $V_1$ of the separator was calculated according to the formula for calculating the volume of a cylinder; with reference to GB/T 24586-2009, the real volume $V_2$ of the separator was measured using a true density tester by employing the gas displacement method with inert nitrogen gas as the medium. The porosity of the separator = $(V_1 - V_2)/V_1 \times 100\%$. The testing instrument was the AccuPyc II 1340 automatic true density analyzer from Micromeritics, USA. For the sake of accuracy, the average value of 5 parallel samples was taken as the test result.

The air permeability of the separator was tested by the following method: At 25 °C, the time (second, s) required for 100 mL of air to pass through the separator was determined. The larger the value, the poorer the air permeability of the separator. The testing instrument was the Oken type air-permeability tester (Kumagai Riki Kogyo, KRK). For the sake of accuracy, the average value of 5 parallel samples was taken as the test result.

The ionic conductivity of the separator was obtained through the AC impedance spectroscopy experiment. The test method is as follows: The separator was cut into a disc with a certain area, dried, and placed between two stainless steel electrodes; after absorption of a sufficient amount of electrolytic solution, sealing was performed to form a button battery, and an AC impedance spectroscopy experiment was performed using an electrochemical workstation to obtain the ionic conductivity of the separator. The electrochemical workstation was the Shanghai Chenhua CHI 660C electrochemical workstation, with an AC signal frequency range of 0.01 Hz to 1 MHz and a sine wave potential amplitude of 5 mV. For the sake of accuracy, the average value of 5 parallel samples was taken as the test result.

The thermal shrinkage of the separator is tested by the following method: The separator was punched into samples with a width of 50 mm and a length of 100 mm using a punching machine, 5 parallel samples were placed and fixed on an A4 paper, and then the A4 paper with the samples was placed on a corrugated cardboard with a thickness of 1 mm to 5 mm; the temperature of the forced-air oven was set to 150 °C, and after the temperature reached the set temperature and was stable for 30 min, the corrugated cardboard on which the A4 paper was placed was put into the oven and timing was started, and after the set time (0.5 h in the present application) was reached, the width a1 and the length a2 of the separator were measured. The transverse direction thermal shrinkage of the separator at 150 °C for 0.5 h = [(50 - a1)/50] $\times$ 100%, and the machine direction thermal shrinkage of the separator at 150 °C for 0.5 h = [(100 - a2)/100] $\times$ 100%. For the sake of accuracy, the average value of 5 parallel samples was taken as the test result.

Test of volumetric energy density of battery

At 25 °C, the battery prepared above was charged at a constant current of 0.33C to 4.25 V, and then charged at a constant voltage until the current was less than or equal to 0.05C. After being left to stand for 5 min, the battery was discharged at 0.33C to 2.8 V to obtain the discharge energy Q. Volumetric energy density of the battery (Wh/L) = discharge energy Q/volume V of the battery.

Table 1 shows the performance test results of the separators and the volumetric energy density test results of the batteries in Example 1 and Comparative Example 1.

Table 1

| Serial number | Separator | | | | | | Volumetric energy density (Wh/L) of the battery |
|---|---|---|---|---|---|---|---|
| | Thickness ($\mu$m) | Porosity | Air permeability (sec/100 mL) | Ionic conductivity (mS/cm) | 150 °C/0.5 h transverse direction thermal shrinkage | 150 °C/0.5 h machine direction thermal shrinkage | |
| Example 1 | 8 | 32% | 250 | 0.470 | 2% | 2% | 680 |
| Comparative Example 1 | 12 | 37% | 300 | 0.430 | 4% | 4% | 668 |

It can be learned from the test results in Table 1 that since the porous coating of the separator provided in the example of the present application includes the nanocellulose and the particulate filler, the separator has both a low thickness and a low thermal shrinkage, such that the space utilization rate of the battery can be improved, and thereby the battery can have high volumetric energy density and high thermal stability.

**Example 2**

The battery was prepared by a method similar to that of Example 1, except that the positive electrode active material $LiNi_{0.9}Co_{0.06}Mn_{0.04}O_2$ had a single-crystal morphology, the volume distribution particle sizes Dv50, Dv90, and Dv10 of the positive electrode active material were 3.5 $\mu$m, 7 $\mu$m, and 2 $\mu$m, respectively, and (Dv90 - Dv10)/Dv50 was 1.43.

**Example 3**

The battery was prepared by a method similar to that of Example 1, except that the positive electrode active material $LiNi_{0.9}Co_{0.06}Mn_{0.04}O_2$ included a single-crystal morphology and a polycrystalline morphology, the weight proportion of particles with the single-crystal morphology was 80 wt%, the weight proportion of particles with the polycrystalline morphology was 20 wt%, the volume distribution particle sizes Dv50, Dv90, and Dv10 of the positive electrode active material were 4.6 $\mu$m, 9.0 $\mu$m, and 2.0 $\mu$m, respectively, and (Dv90 - Dv10)/Dv50 was 1.52.

The volume distribution particle sizes Dv50, Dv90, and Dv10 of the positive electrode active material with the single-crystal morphology were 2.3 $\mu$m, 4.4 $\mu$m, and 1.4 $\mu$m, respectively, and (Dv90 - Dv10)/Dv50 was 1.30.

The volume distribution particle sizes Dv50, Dv90, and Dv10 of the positive electrode active material with the polycrystalline morphology were 8.5 $\mu$m, 14.5 $\mu$m, and 4 $\mu$m, respectively, and (Dv90 - Dv10)/Dv50 was 1.24.

**Example 4**

The battery was prepared by a method similar to that of Example 1, except that the positive electrode active material $LiNi_{0.9}Co_{0.06}Mn_{0.04}O_2$ included a single-crystal morphology and a polycrystalline morphology, the weight proportion of particles with the single-crystal morphology was 40 wt%, the weight proportion of particles with the polycrystalline morphology was 60 wt%, the volume distribution particle sizes Dv50, Dv90, and Dv10 of the positive electrode active material were 5.3 $\mu$m, 13.5 $\mu$m, and 1.5 $\mu$m, respectively, and (Dv90 - Dv10)/Dv50 was 2.26.

The volume distribution particle sizes Dv50, Dv90, and Dv10 of the positive electrode active material with the single-crystal morphology were 3.5 $\mu$m, 7 $\mu$m, and 2 $\mu$m, respectively, and (Dv90 - Dv10)/Dv50 was 1.43.

The volume distribution particle sizes Dv50, Dv90, and Dv10 of the positive electrode active material with the polycrystalline morphology were 8.5 $\mu$m, 14.5 $\mu$m, and 4 $\mu$m, respectively, and (Dv90 - Dv10)/Dv50 was 1.24.

**Example 5**

The battery was prepared by a method similar to that of Example 1, except that the positive electrode active material $LiNi_{0.9}Co_{0.06}Mn_{0.04}O_2$ included a single-crystal morphology and a polycrystalline morphology, the weight proportion of particles with the single-crystal morphology was 30 wt%, the weight proportion of particles with the polycrystalline morphology was 70 wt%, the volume distribution particle sizes Dv50, Dv90, and Dv10 of the positive electrode active material were 6.0 $\mu$m, 13.8 $\mu$m, and 1.6 $\mu$m, respectively, and (Dv90 - Dv10)/Dv50 was 2.03.

The volume distribution particle sizes Dv50, Dv90, and Dv10 of the positive electrode active material with the single-crystal morphology were 3.5 $\mu$m, 7 $\mu$m, and 2 $\mu$m, respectively, and (Dv90 - Dv10)/Dv50 was 1.43.

The volume distribution particle sizes Dv50, Dv90, and Dv10 of the positive electrode active material with the polycrystalline morphology were 8.5 $\mu$m, 14.5 $\mu$m, and 4 $\mu$m, respectively, and (Dv90 - Dv10)/Dv50 was 1.24.

**Example 6**

The battery was prepared by a method similar to that of Example 1, except that the positive electrode active material $LiNi_{0.9}Co_{0.06}Mn_{0.04}O_2$ included a single-crystal morphology and a polycrystalline morphology, the weight proportion of particles with the single-crystal morphology was 20 wt%, the weight proportion of particles with the polycrystalline morphology was 80 wt%, the volume distribution particle sizes Dv50, Dv90, and Dv10 of the positive electrode active material were 6.5 $\mu$m, 14.3 $\mu$m, and 1.9 $\mu$m, respectively, and (Dv90 - Dv10)/Dv50 was 1.91.

The volume distribution particle sizes Dv50, Dv90, and Dv10 of the positive electrode active material with the single-crystal morphology were 3.5 $\mu$m, 7 $\mu$m, and 2 $\mu$m, respectively, and (Dv90 - Dv10)/Dv50 was 1.43.

The volume distribution particle sizes Dv50, Dv90, and Dv10 of the positive electrode active material with the polycrystalline morphology were 8.5 $\mu$m, 14.5 $\mu$m, and 4 $\mu$m, respectively, and (Dv90 - Dv10)/Dv50 was 1.24.

**Example 7**

The battery was prepared by a method similar to that of Example 1, except that in the preparation of the separator, the nanocellulose had an average length of 210 nm and an average diameter of 12 nm.

**Example 8**

The battery was prepared by a method similar to that of Example 1, except that in the preparation of the separator, the nanocellulose had an average length of 595 nm and an average diameter of 34 nm.

**Example 9**

The battery was prepared by a method similar to that of Example 1, except that in the preparation of the separator, the nanocellulose had an average length of 175 nm and an average diameter of 10 nm.

**Example 10**

The battery was prepared by a method similar to that of Example 1, except that in the preparation of the separator, the nanocellulose had an average length of 770 nm and an average diameter of 44 nm.

**Example 11**

The battery was prepared by a method similar to that of Example 1, except that in the preparation of the separator, the average particle size of the first component aluminum oxide was 250 nm, and the average particle size of the second component aluminum oxide was 200 nm.

**Example 12**

The battery was prepared by a method similar to that of Example 1, except that in the preparation of the separator, the weight ratio of the nanocellulose, the first component aluminum oxide, the second component aluminum oxide, and the binder polyacrylic acid was 20:35:43:2.

**Comparative Example 2**

The battery was prepared by a method similar to that of Example 1, except that the positive electrode active material $LiNi_{0.9}Co_{0.06}Mn_{0.04}O_2$ included a single-crystal morphology and a polycrystalline morphology, the weight proportion of particles with the single-crystal morphology was 20 wt%, the weight proportion of particles with the polycrystalline morphology was 80 wt%, the volume distribution particle sizes Dv50, Dv90, and Dv10 of the positive electrode active material were 8.5 μm, 14.5 μm, and 4 μm, respectively, and (Dv90 - Dv10)/Dv50 was 1.24.

The volume distribution particle sizes Dv50, Dv90, and Dv10 of the positive electrode active material with the single-crystal morphology were 4.6 μm, 9.0 μm, and 2.0 μm, respectively, and (Dv90 - Dv10)/Dv50 was 1.52.

The volume distribution particle sizes Dv50, Dv90, and Dv10 of the positive electrode active material with the polycrystalline morphology were 10 μm, 16.5 μm, and 4.5 μm, respectively, and (Dv90 - Dv10)/Dv50 was 1.2.

Low-temperature power performance test of battery

At 25 °C, the battery prepared above was charged at a constant current of 0.33C to 4.25 V, and then charged at a constant voltage until the current was less than or equal to 0.05C. After being left to stand for 5 min, the battery was discharged at 0.33C to 2.8 V, and the discharge capacity A and the discharge energy B were recorded. At 25 °C, the battery prepared above was charged to 4.25 V at a constant current of 0.33C, and then charged at a constant voltage until the current was less than or equal to 0.05C. After being left to stand for 30 min, the battery was discharged at 0.33C for 90 min, the SOC was adjusted to 50%, and the pre-discharge voltage U1 was recorded. Then, the temperature was adjusted to -25 °C, and the battery was allowed to stand for 2 h until the temperature of the battery was stable. Then, the battery was discharged at a constant current of 1C for 10 s, and the post-discharge voltage U2 was recorded.

The power W of the battery = lower cut-off voltage × (U1 - lower cut-off voltage)/(U1 - U2)/1C.

Power density P = power W of the battery/discharge energy B of the battery, unit: W/Wh. The lower cut-off voltage was 2.8 V.

For the sake of accuracy, the average value of 5 parallel samples was taken as the test result.

Cycle performance test of battery

At 25 °C, the battery prepared above was charged to 4.25 V at a constant current of 0.5C, and then charged at a constant voltage until the current was ≤ 0.05C. After being left to stand for 30 min, the battery was discharged to 2.8 V at 0.5C. The battery was subjected to a cyclic charge-discharge test according to the above method, and the discharge capacity after each cycle was recorded until the discharge capacity of the battery decreased to 80% of the discharge capacity of the first cycle. The number of cycles at this time was taken as the cycle life of the battery.

For the sake of accuracy, the average value of 2 parallel samples was taken as the test result.

Table 2 shows the low-temperature power performance and cycle performance test results of the batteries in Examples 1-12 and Comparative Example 2.

Table 2

| Serial number | Battery performance | |
|---|---|---|
| | Low-temperature power density P (W/Wh) | Number of cycles (cycles) |
| Example 1 | 0.501 | 984 |
| Example 2 | 0.460 | 1064 |
| Example 3 | 0.523 | 975 |
| Example 4 | 0.467 | 968 |
| Example 5 | 0.472 | 934 |
| Example 6 | 0.481 | 913 |
| Example 7 | 0.452 | 902 |
| Example 8 | 0.458 | 923 |
| Example 9 | 0.448 | 883 |
| Example 10 | 0.446 | 914 |
| Example 11 | 0.472 | 935 |
| Example 12 | 0.462 | 942 |
| Comparative Example 2 | 0.435 | 843 |

It can be learned from the test results in Table 2 that the battery using the separator of Example 1 also satisfies that the positive electrode active material of the positive electrode plate includes the layered lithium-containing transition metal oxide, and when the volume distribution particle size Dv50 of the positive electrode active material is less than or equal to 6.5 μm, the battery can also have both good low-temperature power performance and good cycle performance.

It can also be learned from the test results in Table 2 that the performance of the battery can be further improved by further adjusting the composition of the porous coating of the separator.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A battery cell, comprising an electrode assembly comprising a positive electrode plate and an separator, wherein the positive electrode plate comprises a positive electrode current collector and a positive electrode film layer disposed on at least one surface of the positive electrode current collector, the positive electrode film layer comprises a positive electrode active material, the positive electrode active material comprises a layered lithium-containing transition metal oxide, and a volume distribution particle size Dv50 of the positive electrode active material is less than or equal to 6.5 μm; the separator comprises a porous substrate and a porous coating disposed on at least one surface of the porous substrate, and the porous coating comprises a fibrous material and a particulate filler.

2. The battery cell according to claim 1, wherein the volume distribution particle size Dv50 of the positive electrode active material is less than or equal to 6 μm, optionally 2 μm to 5.3 μm.

3. The battery cell according to any one of claims 1 to 2, wherein the positive electrode active material further satisfies one or more of the following conditions (1) to (3):

   (1) a volume distribution particle size Dv90 of the positive electrode active material is less than or equal to 14.3 μm, optionally 4.4 μm to 13.5 μm;
   (2) a volume distribution particle size Dv10 of the positive electrode active material is less than or equal to 3 μm, optionally 1 μm to 2 μm;
   (3) a particle size distribution (Dv90 - Dv10)/Dv50 of the positive electrode active material is 0.8-2.5, optionally 1.3-2.3.

4. The battery cell according to any one of claims 1 to 3, wherein the positive electrode active material comprises a layered lithium-containing transition metal oxide with a single-crystal morphology.

5. The battery cell according to claim 4, wherein a volume distribution particle size Dv50 of the layered lithium-containing transition metal oxide with the single-crystal morphology is less than or equal to 5 μm, optionally 2 μm to 4 μm.

6. The battery cell according to any one of claims 4 to 5, wherein the layered lithium-containing transition metal oxide with the single-crystal morphology further satisfies one or more of the following conditions (1) to (3):

   (1) a volume distribution particle size Dv90 of the layered lithium-containing transition metal oxide with the single-crystal morphology is less than or equal to 10 μm, optionally 4.4 μm to 8 μm;
   (2) a volume distribution particle size Dv10 of the layered lithium-containing transition metal oxide with the single-crystal morphology is less than or equal to 3 μm, optionally 1 μm to 2 μm;
   (3) a particle size distribution (Dv90 - Dv10)/Dv50 of the layered lithium-containing transition metal oxide with the single-crystal morphology is 0.8-2.5, optionally 1.3-1.5.

7. The battery cell according to any one of claims 4 to 6, wherein the positive electrode active material further comprises a layered lithium-containing transition metal oxide with a polycrystalline morphology.

8. The battery cell according to claim 7, wherein the layered lithium-containing transition metal oxide with the polycrystalline morphology satisfies one or more of the following conditions (1) to (4):

(1) a volume distribution particle size Dv50 of the layered lithium-containing transition metal oxide with the polycrystalline morphology is 7 μm to 12 μm, optionally 8 μm to 10 μm;

(2) a volume distribution particle size Dv90 of the layered lithium-containing transition metal oxide with the polycrystalline morphology is 12 μm to 20 μm, optionally 13 μm to 18 μm;

(3) a volume distribution particle size Dv10 of the layered lithium-containing transition metal oxide with the polycrystalline morphology is 2 μm to 6 μm, optionally 3 μm to 5 μm;

(4) a particle size distribution (Dv90 - Dv10)/Dv50 of the layered lithium-containing transition metal oxide with the polycrystalline morphology is 1.1-1.5, optionally 1.2-1.4.

9. The battery cell according to any one of claims 7 to 8, wherein a weight proportion of the layered lithium-containing transition metal oxide with the polycrystalline morphology in the positive electrode active material is 20 wt% to 80 wt%.

10. The battery cell according to any one of claims 1 to 9, wherein

an aspect ratio of the fibrous material is 5-60, optionally 10-30; and/or
an average length of the fibrous material is 100 nm to 600 nm, optionally 200 nm to 450 nm; and/or
an average diameter of the fibrous material is 11 nm to 40 nm, optionally 12 nm to 34 nm.

11. The battery cell according to any one of claims 1 to 10, wherein

a weight content of the fibrous material in the porous coating is less than or equal to 40 wt%, optionally 10 wt% to 30 wt%; and/or
a weight content of the particulate filler in the porous coating is greater than or equal to 60 wt%, optionally 68 wt% to 88 wt%.

12. The battery cell according to any one of claims 1 to 11, wherein the fibrous material comprises one or more of an organic material and an inorganic material.

13. The battery cell according to claim 12, wherein

the organic material comprises one or more of nanocellulose, polytetrafluoroethylene nanofiber, and polyamide nanofiber; and/or
the inorganic material comprises one or more of halloysite nanotube, nanorod-shaped aluminum oxide, nanorod-shaped boehmite, nanorod-shaped silicon oxide, and glass fiber.

14. The battery cell according to any one of claims 1 to 13, wherein the fibrous material comprises nanocellulose, the nanocellulose comprises a modifying group, and the modifying group comprises one or more of an amine group, a carboxyl group, an aldehyde group, a sulfonic acid group, a boric acid group, and a phosphoric acid group, optionally one or more of a sulfonic acid group, a boric acid group, and a phosphoric acid group.

15. The battery cell according to any one of claims 1 to 14, wherein the particulate filler comprises one or more of an organic particle, an inorganic particle, and an organic-inorganic framework material.

16. The battery cell according to any one of claims 1 to 15, wherein the particulate filler comprises a first component with a secondary particle morphology and a second component with a primary particle morphology.

17. The battery cell according to claim 16, wherein
an average particle size of the first component with the secondary particle morphology is less than an average particle size of the second component with the primary particle morphology.

18. The battery cell according to any one of claims 16 to 17, wherein

the average particle size of the first component with the secondary particle morphology is less than 200 nm; and/or
the average particle size of the second component with the primary particle morphology is 200 nm to 800 nm.

19. The battery cell according to any one of claims 16 to 18, wherein a particle size of primary particles in the first component forming the secondary particle morphology is 8 nm to 30 nm, optionally 10 nm to 20 nm.

20. The battery cell according to any one of claims 16 to 19, wherein a weight content of the first component with the secondary particle morphology in the porous coating is greater than a weight content of the second component with the primary particle morphology in the porous coating.

21. The battery cell according to any one of claims 16 to 20, wherein
the weight content of the first component with the secondary particle morphology in the porous coating is 20 wt% to 85 wt%; and/or the weight content of the second component with the primary particle morphology in the porous coating is 5 wt% to 60 wt%.

22. The battery cell according to any one of claims 1 to 21, wherein

a thickness of the porous substrate is less than or equal to 5.5 $\mu$m, optionally 3 $\mu$m to 5 $\mu$m; and/or
a thickness of the porous coating is less than or equal to 3 $\mu$m, optionally 0.5 $\mu$m to 2 $\mu$m.

23. The battery cell according to any one of claims 1 to 22, wherein the layered lithium-containing transition metal oxide comprises a Ni element, and a molar amount of the Ni element accounts for 70% or more of a total molar amount of transition metal elements in the layered lithium-containing transition metal oxide; optionally, the molar amount of the Ni element accounts for 90% or more of the total molar amount of the transition metal elements in the layered lithium-containing transition metal oxide.

24. The battery cell according to any one of claims 1 to 23, wherein an upper charge cut-off voltage of the battery cell is greater than or equal to 4.25 V, optionally 4.30 V to 4.45 V.

25. An electric device, comprising the battery cell according to any one of claims 1 to 24.

FIG. 1

FIG. 2

FIG. 3

FIG. 4

FIG. 5

FIG. 6

## INTERNATIONAL SEARCH REPORT

| International application No. |
| :--- |
| **PCT/CN2024/093541** |

| | |
| :--- | :--- |
| **A. CLASSIFICATION OF SUBJECT MATTER** | |
| H01M4/525(2010.01)i; H01M4/505(2010.01)i; H01M4/485(2010.01)i; H01M50/491(2021.01)i; H01M50/449(2021.01)i; H01M10/058(2010.01)i; H01M10/0525(2010.01)i | |
| According to International Patent Classification (IPC) or to both national classification and IPC | |

| | |
| :--- | :--- |
| **B. FIELDS SEARCHED** | |
| Minimum documentation searched (classification system followed by classification symbols) | |
| IPC:H01M4/- H01M10/- H01M50/- | |
| Documentation searched other than minimum documentation to the extent that such documents are included in the fields searched | |
| Electronic data base consulted during the international search (name of data base and, where practicable, search terms used) | |
| CNABS, CNTXT, ENTXTC, OETXT, VEN, WPABSC, CNKI, ISI Web of Science: 低温, 隔层, 隔离层, 隔离带, 隔离件, 隔离膜, 间隔物, 孔?, 粒径, 宁德时代新能源科技股份有限公司, 纤维, 正极, 锂, Dv50, RANGE[0~6.5μm], Positive electrode, coat+, lithium, Fiber, Isolating film, hypothermy | |

**C. DOCUMENTS CONSIDERED TO BE RELEVANT**

| Category* | Citation of document, with indication, where appropriate, of the relevant passages | Relevant to claim No. |
| :--- | :--- | :--- |
| PX | CN 117199343 A (CONTEMPORARY AMPEREX TECHNOLOGY CO., LTD.) 08 December 2023 (2023-12-08)<br>description, paragraphs [0003]-[0053] | 1-25 |
| Y | CN 116941117 A (CONTEMPORARY AMPEREX TECHNOLOGY CO., LTD.) 24 October 2023 (2023-10-24)<br>description, paragraphs [0005]-[0321] | 1-25 |
| Y | CN 116885098 A (CALB GROUP CO., LTD.) 13 October 2023 (2023-10-13)<br>description, paragraphs [0005]-[0095] | 1-25 |
| Y | CN 116031379 A (DONGGUAN AMPEREX TECHNOLOGY LTD.) 28 April 2023 (2023-04-28)<br>description, paragraphs [0004]-[0173] | 1-25 |
| Y | CN 116666733 A (CONTEMPORARY AMPEREX TECHNOLOGY CO., LTD.) 29 August 2023 (2023-08-29)<br>description, paragraphs [0003]-[0146] | 1-25 |

| | |
| :--- | :--- |
| ☑ Further documents are listed in the continuation of Box C. | ☑ See patent family annex. |

| | |
| :--- | :--- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| :--- | :--- |
| **2024.7.17** | **25 July 2024** |

| Name and mailing address of the ISA/CN | Authorized officer |
| :--- | :--- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/093541** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | CN 116982209 A (CONTEMPORARY AMPEREX TECHNOLOGY CO., LTD.) 31 October 2023 (2023-10-31)<br>description, paragraphs [0005]-[0067] | 1-25 |
| Y | CN 117015901 A (CONTEMPORARY AMPEREX TECHNOLOGY CO., LTD.) 07 November 2023 (2023-11-07)<br>description, paragraphs [0006]-[0102] | 1-25 |
| A | CN 116918160 A (CONTEMPORARY AMPEREX TECHNOLOGY CO., LTD.) 20 October 2023 (2023-10-20)<br>description, paragraphs [0005]-[0057] | 1-25 |
| A | US 2021167366 A1 (CONTEMPORARY AMPEREX TECHNOLOGY CO., LTD.) 03 June 2021 (2021-06-03)<br>entire description | 1-25 |

Form PCT/ISA/210 (second sheet) (July 2022)

## INTERNATIONAL SEARCH REPORT
### Information on patent family members

International application No.

**PCT/CN2024/093541**

| Patent document cited in search report | | | Publication date (day/month/year) | Patent family member(s) | | | Publication date (day/month/year) |
|---|---|---|---|---|---|---|---|
| CN | 117199343 | A | 08 December 2023 | None | | | |
| CN | 116941117 | A | 24 October 2023 | None | | | |
| CN | 116885098 | A | 13 October 2023 | None | | | |
| CN | 116031379 | A | 28 April 2023 | None | | | |
| CN | 116666733 | A | 29 August 2023 | None | | | |
| CN | 116982209 | A | 31 October 2023 | None | | | |
| CN | 117015901 | A | 07 November 2023 | None | | | |
| CN | 116918160 | A | 20 October 2023 | WO | 2023245836 | A1 | 28 December 2023 |
| | | | | US | 2024120614 | A1 | 11 April 2024 |
| | | | | WO | 2023245655 | A1 | 28 December 2023 |
| | | | | WO | 2023245837 | A1 | 28 December 2023 |
| | | | | WO | 2023245838 | A1 | 28 December 2023 |
| | | | | WO | 2023245839 | A1 | 28 December 2023 |
| | | | | WO | 2023245840 | A1 | 28 December 2023 |
| | | | | KR | 20240001699 | A | 03 January 2024 |
| | | | | EP | 4325648 | A1 | 21 February 2024 |
| US | 2021167366 | A1 | 03 June 2021 | WO | 2021108945 | A1 | 10 June 2021 |
| | | | | EP | 4071846 | A1 | 12 October 2022 |
| | | | | EP | 4071846 | A4 | 27 March 2024 |
| | | | | US | 11121362 | B2 | 14 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202311475935

**Non-patent literature cited in the description**

*   *GB/T 19077-2016*
*   *GB/T 6040-2019*
*   *GB/T 24586-2009*
*   *GB/T 12008.3-2009*